# EUROPEAN PATENT APPLICATION

(11) **EP 4 553 090 A1**
(43) Date of publication of application: **14.05.2025**
(21) Application number: 23835327.0
(22) Date of filing: 22.06.2023
(51) Int. Cl.: C08F 8/04, B60C 1/00, C08F 236/10, C08K 3/04, C08L 7/00, C08L 9/06, C08L 15/00

(54) **CONJUGATED DIENE POLYMER, RUBBER COMPOSITION, AND TIRE MEMBER**

(30) Priority: 04.07.2022 JP 2022108011
(71) Applicant: Asahi Kasei Kabushiki Kaisha, Tokyo 1000006 (JP)
(72) Inventor: MATSUOKA, Daigo, Tokyo 100-0006 (JP); KONOMOTO, Tsuneaki, Tokyo 100-0006 (JP); HAYATA, Daisuke, Tokyo 100-0006 (JP)
(74) Representative: Strehl & Partner mbB
(86) International application number: PCT/JP2023/023191
(87) International publication number: WO 2024/009793

(57) **Abstract**

The present invention provides a conjugated diene polymer, wherein a molecular weight between entangled portions is 2,400 g/mol or more and 3,000 g/mol or less, a Mooney viscosity measured at 100°C is 40 or more, and Mooney stress relaxation (MSR) is 0.8 or more, and a vinyl aromatic monomer unit content is 1% by mass or more and 18% by mass or less.

## Description

### Technical Field

The present invention relates to a conjugated diene polymer, a rubber composition, and a member for a tire.

### Background Art

From the viewpoint of reduction of environmental load, the lifetime of tires for vehicles has conventionally been required to be increased. One of problems preventing the lifetime increase of tires is deterioration of a sidewall caused by crack growth due to repetitive strain or stone chipping occurring during driving.

As a rubber composition for a tire meeting the requirement of the lifetime increase of tires, a rubber composition having high crack growth resistance and chipping resistance is demanded.

The chipping resistance of a tire is known to be correlated with the elongation at break of a rubber composition. Therefore, for the lifetime increase of a tire, it is demanded to improve the crack growth resistance and the elongation at break of the rubber composition.

In general, as a method for improving breaking properties including elongation at break of a rubber composition, a method in which the molecular weight of the rubber is increased can be employed. As a method for improving the crack growth of a rubber composition, a method using polybutadiene having a high molecular weight and a small branch number has been disclosed (see, for example, Patent Document 1).

As described above, for improving the elongation at break and the crack growth resistance of a rubber composition for a tire, it is presumed that a rubber composition containing polybutadiene having a high molecular weight and a small branch number is preferably used.

### List of Prior Art Documents

### Patent Document

Patent Document 1: Japanese Patent Laid-Open No. 2019-218503

### Summary of Invention

### Problems to be Solved by Invention

A high molecular weight polybutadiene has, however, a high entanglement density of rubber, and does not have sufficient energy dissipation, and therefore, a problem of a rubber composition using such a high molecular weight polybutadiene is that there is room for improvement in the crack growth resistance.

Accordingly, an object of the present invention is to provide a conjugated diene polymer from which a rubber composition excellent in balance between elongation at break and crack growth resistance can be obtained.

### Means for Solving Problems

The present inventors have made earnest studies for solving the problem of the conventional technique, and as a result, have found that the problem of the conventional technique can be solved by a conjugated diene polymer having a specific molecular weight between entangled portions, having a Mooney viscosity and Mooney stress relaxation equal to or larger than prescribed values, and having a vinyl aromatic monomer unit content falling in a prescribed numerical range, resulting in accomplishing the present invention.

Specifically, the present invention provides the following:
[1] A conjugated diene polymer, wherein a molecular weight between entangled portions is 2,400 g/mol or more and 3,000 g/mol or less, a Mooney viscosity measured at 100°C is 40 or more, and Mooney stress relaxation (MSR) is 0.8 or more, and a vinyl aromatic monomer unit content is 1% by mass or more and 18% by mass or less.
[2] The conjugated diene polymer according to [1], having a weight average molecular weight of 300,000 or more.
[3] The conjugated diene polymer according to [1] or [2], wherein a nitrogen content is 70 ppm or more and 300 ppm or less, and a modification ratio is 60% or more.
[4] The conjugated diene polymer according to any one of [1] to [3], wherein the Mooney stress relaxation (MSR) is 0.80 or more and 1.80 or less.
[5] The conjugated diene polymer according to any one of [1] to [4], wherein assuming that a content of a structure represented by the following formula (1) is C1 mol%, that a content of a structure represented by the following formula (2) is C2 mol%, that a content of a structure represented by the following formula (3) is C3 mol%, and that a content of a structure represented by the following formula (4) is C4 mol%, 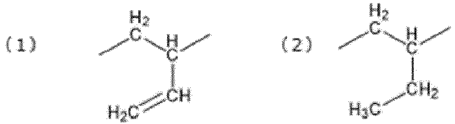 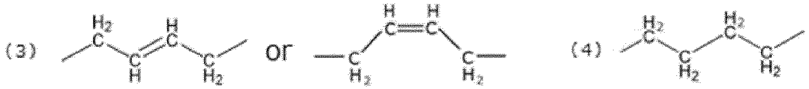 a difference α between a value of (C2 + C4)/(C1 + C2 + C3 + C4) and a value of (C1 + C2)/(C1 + C2 + C3 + C4) is 0.1 or less.
[6] The conjugated diene polymer according to any one of [1] to [5], wherein a nitrogen content is 90 ppm or more and 300 ppm or less, and a modification ratio is 60% or more.
[7] The conjugated diene polymer according to any one of [1] to [6], wherein the conjugated diene polymer is a hydrogenated styrene-butylene copolymer having a hydrogenation rate of 50 mol% or more.
[8] A rubber composition, comprising: 100 parts by mass of a rubber component containing 30 parts by mass or more of the conjugated diene polymer according to any one of [1] to [7], and 30 parts by mass or more of a natural rubber; and 30 parts by mass or more of carbon black.
[9] A member for a tire, comprising the rubber composition according to [8].

### Advantages of Invention

The present invention can provide a conjugated diene polymer from which a rubber composition excellent in balance between elongation at break and crack growth resistance can be obtained.

### Mode for Carrying Out Invention

Now, an embodiment for practicing the present invention (hereinafter referred to as the "present embodiment") will be described in detail.

It is noted that the following present embodiment is merely an example for describing the present invention, and that the present invention is not limited to the following embodiment. The present invention can be practiced with modifications and changes appropriately made within the scope thereof.

### [Conjugated Diene Polymer]

A conjugated diene polymer of the present embodiment has a molecular weight between entangled portions of 2,400 to 3,000 g/mol, has a Mooney viscosity (ML) measured at 100°C of 40 or more, has Mooney stress relaxation (MSR) of 0.8 or more, and has a vinyl aromatic monomer unit content of 1% by mass or more and 18% by mass or less.

Herein, a constituent element of a polymer is described as a "monomer unit", and is described as a "compound" before polymerization.

When the molecular weight between entangled portions, the Mooney viscosity (ML), the Mooney stress relaxation (MSR), and the vinyl aromatic monomer unit content are set respectively to fall in prescribed numerical ranges in the conjugated diene polymer, there is a tendency that a rubber composition excellent in crack growth resistance and elongation at break can be obtained.

The relationship between the respective structures and performances will now be described.

### (Molecular Weight between Entangled Portions)

It is known that a pseudo-equilibrium modulus Gn and a molecular weight Me between entangled portions are in the relationship of
Gn = cRT/Me, (wherein c represents a density, R represents a gas constant, and T represents an absolute temperature) (The Polymer Having the Highest Rubbery Plateau (Polymers, vol. 48, Sept. (1999)).

The term "molecular weight between entangled portions" refers to a molecular weight between entangled portions among molecular chains, and refers to a molecular weight of a unit carrying the stress.

In the conjugated diene polymer of the present embodiment, the molecular weight between entangled portions is obtained, with the elastic modulus Gn at 27°C used as a variable, in accordance with the following expression: molecular weight between entangled portions = cRT/Gn
c: 0.9 × 10⁶ (g/m³)
R: 8.31 (J/K/mol)
T: 300 (K)
Gn: elastic modulus Gn (Pa) at 27°C

In the expression (1), the density in the general expression is used as the constant. This is for the following reason: The density of a polymer depends on the temperature and the molecular structure, but the temperature is constant at 27°C in measuring the elastic modulus. In addition, in the conjugated diene polymer of the present embodiment, the vinyl aromatic monomer unit content, which affects the density of the conjugated diene polymer, is specified to 1% by mass or more and 18% by mass or less. It has been confirmed that when the content is within this range, the density can be allowably approximated to 0.9 × 10⁶ (g/m³).

Specifically, the molecular weight between entangled portions of the conjugate diene polymer of the present embodiment can be measured by a method described in Examples below.

From the viewpoint of the crack growth resistance of a resultant rubber composition, the molecular weight between entangled portions of the conjugated diene polymer of the present embodiment is 2,400 to 3,000 g/mol, preferably 2,600 to 3,000 g/mol, and more preferably 2,700 to 3,000 g/mol.

The present inventors have found, through various examinations made on the relationship between the crack growth resistance of a rubber composition and the structure of a conjugated diene polymer, a correlation between the crack growth resistance of the rubber composition and the molecular weight between entangled portions of the conjugated diene polymer. Regarding the mechanism, it has been experimentally confirmed that the crack growth of the rubber composition is less affected by the change of the molecular weight of the conjugated diene polymer, and that the entanglement density and the branch number of the conjugated diene polymer are dominant. In other words, the crack growth resistance of the rubber composition tends to be better as the entanglement density of the conjugated diene polymer is smaller, and the branch number is smaller. Considering this, as the molecular weight between entangled portions of the conjugated diene polymer is higher, the entanglement density of polymer chains tends to be reduced to easily reduce the entropy elastic modulus. It is presumed that as a result, the stress applied to the conjugated diene polymer is easily dispersed to improve the crack growth resistance of the rubber composition.

As a method for controlling the molecular weight between entangled portions of the conjugated diene polymer of the present embodiment to fall in a prescribed range, a method in which the vinyl aromatic monomer unit content of the conjugated diene polymer, a 1,2-vinyl bond content (hereinafter also referred to as the vinyl bond content) in the conjugated diene polymer, and a hydrogenation rate are adjusted can be employed.

For example, in a polymerization step of the conjugated diene polymer, the molecular weight between entangled portions of the conjugated diene polymer can be increased by increasing the amount of styrene, that is, one of a vinyl aromatic compound, to be added. On the other hand, the molecular weight between entangled portions of the conjugated diene polymer can be controlled to be reduced by reducing the hydrogenation rate, or increasing the 1,2-vinyl bond content in the conjugated diene polymer before hydrogenation.

Specifically, the molecular weight between entangled portions tends to be easily increased due to a high styrene content if the styrene content is 18% by mass, and therefore, a desired molecular weight between entangled portions tends to be obtained by adjusting the 1,2-vinyl bond content in the conjugated diene polymer before hydrogenation to 50 to 80 mol%, and the hydrogenation rate to 40 to 80 mol%.

On the other hand, the molecular weight between entangled portions tends to be easily reduced due to a low styrene content if the styrene content is 1% by mass, and therefore, a desired molecular weight between entangled portions tends to be obtained by adjusting the 1,2-vinyl bond content in the conjugated diene polymer before hydrogenation to 40 to 70 mol%, and the hydrogenation rate to 50 to 90 mol%.

The vinyl aromatic monomer unit content, the 1,2-vinyl bond content, and the hydrogenation rate can be measured by methods described in Examples below.

### (Vinyl Aromatic Monomer Unit Content)

The conjugated diene polymer of the present embodiment has a vinyl aromatic monomer unit content of 1% by mass or more and 18% by mass or less. From the viewpoint of breaking properties obtained when a crosslinking rubber composition containing the conjugated diene polymer of the present embodiment and a crosslinking agent is used in a tire, the vinyl aromatic monomer unit content is 1% by mass or more and 18% by mass or less, preferably 6% by mass or more and 18% by mass or less, and more preferably 12% by mass or more and 18% by mass or less.

Examples of a vinyl aromatic compound constituting the vinyl aromatic monomer unit include, but are not limited to, styrene, p-methylstyrene, α-methylstyrene, vinylethylbenzene, vinylxylene, vinylnaphthalene, and diphenylethylene.

Among these, styrene is preferred from the viewpoint of industrial availability.

One of these may be used, or two or more of these may be used together.

The vinyl aromatic monomer unit content of the conjugated diene polymer of the present embodiment can be controlled to fall in the above-described numerical range by adjusting the amount of a vinyl aromatic compound to be added, and a polymerization time in the polymerization step.

### (Conjugated Diene Monomer Unit)

The conjugated diene polymer of the present embodiment contains a conjugated diene monomer unit.

Examples of a conjugated diene compound constituting the conjugated diene monomer unit include, but are not limited to, 1,3-butadiene, isoprene, 2,3-dimethyl-1,3-butadiene, 1,3-pentadiene, 3-methyl-1,3-pentadiene, 1,3-hexadiene, and 1,3-heptadiene. Among these, 1,3-butadiene and isoprene are preferred, and 1,3-butadiene is more preferred from the viewpoint of industrial availability.

One of these may be used, or two or more of these may be used together.

### (Mooney Viscosity)

A Mooney viscosity (ML) of the conjugated diene polymer is an index including information on the molecular weight, the molecular weight distribution, the branch number, a content of a softener and the like of the conjugated diene polymer.

A Mooney viscosity measured at 100°C of the conjugated diene polymer of the present embodiment is preferably 40 or more, more preferably 50 or more, and further preferably 60 or more from the viewpoint of elongation at break obtained when a crosslinking rubber composition containing the conjugated diene polymer of the present embodiment and a crosslinking agent is used in a tire.

On the other hand, the Mooney viscosity measured at 100°C is preferably 100 or less, more preferably 80 or less, and further preferably 70 or less from the viewpoints of productivity of a rubber composition containing the conjugated diene polymer of the present embodiment, and processability of a rubber composition containing a filler and the like.

As a method for measuring the Mooney viscosity, a method prescribed in ISO 289 described below can be applied.

The Mooney viscosity of the conjugated diene polymer can be controlled to fall in the above-described numerical range by adjusting the amount of a polymerization initiator to be added, and the amount and the type of a coupling agent to be added in the polymerization step of the conjugated diene polymer.

Examples of a method for increasing the Mooney viscosity of the conjugated diene polymer include a method in which the amount of a polymerization initiator is reduced to increase the molecular weight before a coupling step, and a method in which a coupling agent having a large maximum number of couplings is used. From the viewpoint of the crack growth resistance of the rubber composition, the conjugated diene polymer preferably has a smaller branch structure ratio. As the number of branches is larger, the Mooney viscosity tends to be higher, and therefore, when the Mooney viscosity is to be set to 40 or more with the branch structure ratio reduced, the amount of the polymerization initiator to be added is set to about 0.001 g per g of the conjugated diene polymer, and thus, a desired conjugated diene polymer tends to be obtained.

### (Mooney Stress Relaxation)

The conjugated diene polymer of the present embodiment has Mooney stress relaxation (MSR) of 0.8 or more. As the MSR is larger, a stress relaxation rate is higher, resulting in excellent energy dissipation. Similarly to the molecular weight between entangled portions, as the energy dissipation is higher, the stress is less concentrated, and thus, the crack growth resistance of the rubber composition tends to be improved.

From the viewpoint of the crack growth resistance of the rubber composition, the MSR of the conjugated diene polymer of the present embodiment is 0.8 or more, preferably 0.9 or more, and more preferably 1.0 or more.

As a method for controlling the MSR of the conjugated diene polymer to be 0.8 or more, a method in which the branch number of the conjugated diene polymer is reduced, and a method in which the Mooney viscosity is reduced are effectively employed. Specifically, in a conjugated diene polymer having no branch, MSR of about 1.4 can be obtained when the Mooney viscosity is 80.

Since the Mooney viscosity and the MSR of the conjugated diene polymer both depend on the molecular weight and the branch number, for simultaneously obtaining the both falling in the desired numerical ranges, it is necessary to adjust the molecular weight and the branch number in accordance with degrees of contribution, to the control, of the Mooney viscosity and the MSR. As a method easily employed, a method in which the molecular weight is adjusted by adjusting the amount of a polymerization initiator to be added to cause the Mooney viscosity of the conjugated diene polymer to fall in the desired range, and the type of a coupling agent is then appropriately selected to adjust the branch number can be employed.

From the viewpoint of storage stability (cold flow property) of the conjugated diene polymer, the MSR of the conjugated diene polymer is preferably 1.80 or less, more preferably 1.50 or less, and further preferably 1.30 or less. As a method for reducing the MSR, on the contrary to the above-described methods, a method in which the branch number of the conjugated diene polymer is increased, and a method in which the Mooney viscosity is increased are effectively employed.

When the MSR is 1.80 or less, polymer molecular chains are practically sufficiently entangled with one another, and during storage of the conjugated diene polymer at normal temperature, a molded shape can be retained, and deformation under its own weight can be suppressed. Accordingly, the cold flow property is a barometer of the storage stability of the conjugated diene polymer, and is closely correlated with the MSR and the Mooney viscosity of the conjugated diene polymer.

The MSR can be measured by a method described in Examples below, and the cold flow property can be evaluated by a method described in Examples below.

### (Weight Average Molecular Weight of Conjugated Diene Polymer)

The conjugated diene polymer of the present embodiment has a weight average molecular weight (Mw) obtained by gel permeation chromatography (GPC) of preferably 300,000 or more, more preferably 400,000 or more, and further preferably 440,000 or more.

When the Mw of the conjugated diene polymer is 300,000 or more, a vulcanizate thereof tends to have high tensile strength.

The Mw of the conjugated diene polymer of the present embodiment is preferably 700,000 or less, more preferably 650,000 or less, and further preferably 600,000 or less. When the Mw is 700,000 or less, processability in kneading obtained when the conjugated diene polymer of the present embodiment is used in a tire composition is excellent, a filler is sufficiently dispersed therein, and excellent low fuel consumption performance is obtained.

The weight average molecular weight of the conjugated diene polymer can be calculated based on a molecular weight in terms of polystyrene measured by GPC, and can be measured by a method described in Examples below.

The weight average molecular weight of the conjugated diene polymer can be controlled to fall in the above-described numeral range by adjusting, in the polymerization step, the amount of a monomer to be added, the polymerization time, the polymerization temperature, and the amounts of a polymerization initiator and a polar compound to be added.

### (Glass Transition Temperature of Conjugated Diene Polymer)

The conjugated diene polymer of the present embodiment has a glass transition temperature (Tg) measured with a differential scanning calorimeter of preferably -50°C or less, more preferably -55°C or less, and further preferably -60°C or less. When the Tg is within this range, the hysteresis loss of a vulcanizate containing the conjugated diene polymer tends to be lower to attain excellent low fuel consumption performance when used as a composition for a tire.

The Tg of the conjugated diene polymer can be measured by a method described in Examples below.

### (Modification of Conjugated Diene Polymer)

The conjugated diene polymer of the present embodiment preferably contains a tin atom, a nitrogen atom, or a silicon atom, and more preferably contains both a nitrogen atom and a silicon atom from the viewpoint of low fuel consumption performance obtained in use as a tire material.

In the present embodiment, a compound containing a nitrogen atom is designated as a modifier, and addition of a modifier to the conjugated diene polymer is referred to as modification.

### (Modification Ratio of Conjugated Diene Polymer)

The conjugated diene polymer of the present embodiment has a modification ratio measured by column adsorption GPC of preferably 60% or more.

When the modification ratio is 60% or more, there is a tendency that excellent low fuel consumption performance can be obtained when a vulcanizate containing carbon black and/or silica as a filler is used as a tire member.

The modification ratio of the conjugated diene polymer of the present embodiment is more preferably 70% or more, and further preferably 75% or more.

The modification ratio can be measured by chromatography capable of separating a modified component having a functional group from an unmodified component.

An example of the method employing chromatography includes a method in which a column for gel permeation chromatography using, as a filler, a polar component adsorbing a specific functional group such as silica is used to perform quantitative determination with internal standard of a non-adsorbed component used for comparison (column adsorption GPC).

More specifically, the modification ratio is obtained by measuring an amount of adsorption onto a silica-based column based on a difference between a chromatogram obtained by measuring a sample solution containing a sample and low molecular weight internal standard polystyrene with a polystyrene-based gel column and a chromatogram obtained therefrom with the silica-based column.

Further specifically, the modification ratio can be measured by a method described in Examples below.

In the conjugated diene polymer of the present embodiment, the modification ratio can be controlled by adjusting an amount of a modifier to be added and a reaction method, and thus, can be controlled to fall in the above-described numerical range.

For example, the modification ratio can be controlled as described above through control of polymerization conditions by combining a polymerization method using an organolithium compound having at least one nitrogen atom in a molecule described below, a method for copolymerizing a monomer having at least one nitrogen atom in a molecule, and a method using a modifier of a structural formula described below.

### (Nitrogen Content)

The conjugated diene polymer of the present embodiment preferably has a nitrogen content measured by trace nitrogen analysis of 70 ppm or more and 300 ppm or less.

When the nitrogen content is 70 ppm or more, excellent low fuel consumption performance tends to be exhibited. The nitrogen content is more preferably 90 ppm or more, and further preferably 110 ppm or more.

When the conjugated diene polymer of the present embodiment is modified at a terminal, the nitrogen content tends to be reduced as a molecular chain is longer to increase a molecular weight even if the number of nitrogen atoms contained in a modifier is the same.

The nitrogen content of the conjugated diene polymer is preferably 300 ppm or less, more preferably 250 ppm or less, and further preferably 200 ppm or less from the viewpoint of processability.

The nitrogen content can be measured by a method described in Examples below.

The nitrogen content can be controlled to fall in the above-described numerical range by adjusting the type and an amount of a modifier to be added.

In comparison using the same conjugated diene polymer, the nitrogen content tends to be larger as the modification ratio is higher, but the nitrogen content depends also on the type and the molecular weight of a modifier, and hence is not always correlated with the modification ratio. As a result, as described above, the modification ratio tends to easily affect low fuel consumption performance obtained in using the conjugated diene polymer in a tire, and the nitrogen content tends to easily affect tensile strength.

In the conjugated diene polymer of the present embodiment, as a method for separately controlling the modification ratio and the nitrogen content, a method in which a modifier having a high nitrogen content is added is effective when the nitrogen content is desired to be increased with the modification ratio retained. When such a modifier having a high nitrogen content is used, in kneading a rubber composition for a tire using the conjugated diene polymer, there is a tendency that the low fuel consumption performance can be improved because dispersion of carbon black is accelerated through action with the carbon black through a hydrogen bond. Similarly, a method in which a molecular weight is adjusted can be a method for separately controlling the modification ratio and the nitrogen content of the conjugated diene polymer. Specifically, when the molecular weight of the conjugated diene polymer is reduced, the nitrogen content can be changed with the modification ratio retained.

### (Modifier)

The modifier is not especially limited, and any of conventionally known modifiers can be used.

As the modifier, from the viewpoint of the low fuel consumption performance of a vulcanizate of the conjugated diene polymer of the present embodiment, a compound having a nitrogen atom is preferred, and a nitrogen atom-containing alkoxysilane compound is more preferred.

Examples of the nitrogen-group containing alkoxysilane compound include, but are not limited to, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(5-trimethoxysilylpentyl)-1-aza-2-silacycloheptane, 2,2-dimethoxy-1-(3-dimethoxymethylsilylpropyl)-1-aza-2-silacyclopentane, 2,2-diethoxy-1-(3-diethoxyethylsilylpropyl)-1-aza-2-silacyclopentane, 2-methoxy-2-methyl-1-(3-trimethoxysilylpropyl)-1-aza-2-silacyclopentane, 2-ethoxy-2-ethyl-1-(3-triethoxysilylpropyl)-1-aza-2-silacyclopentane, 2-methoxy-2-methyl-1-(3-dimethoxymethylsilylpropyl)-1-aza-2-silacyclopentane, 2-ethoxy-2-ethyl-1-(3-diethoxyethylsilylpropyl)-1-aza-2-silacyclopentane, tris(3-trimethoxysilylpropyl)amine, tris(3-methyldimethoxysilylpropyl)amine, tris(3-triethoxysilylpropyl)amine, tris(3-methyldiethoxysilylpropyl) amine, tris(trimethoxysilylmethyl)amine, tris(2-trimethoxysilylethyl)amine, tris(4-trimethoxysilylbutyl)amine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, N-(3-(bis(3-(trimethoxysilyl)propyl)amino)propyl)-N-methyl-N-(3-(methyl(3-(trimethoxysilyl)propyl)amino)propyl)-N-(3-(trimethoxysilyl)propyl)-1,3-propanediamine, and 3-(4-methylpiperazine-1-yl)propyltriethoxysilane.

### (Monomer Unit having Unsaturated Group of Conjugated Diene Polymer)

The conjugated diene polymer of the present embodiment preferably contains 10% by mass or more of a monomer unit having an unsaturated group, such as a conjugated diene monomer unit, or myrcene (a monomer unit not hydrogenated but remaining as an unsaturated group when the conjugated diene is partially hydrogenated).

The monomer unit having an unsaturated group is not limited to a conjugated diene monomer unit and myrcene, but may include another monomer unit.

Since a conjugated diene monomer unit or myrcene has a double bond, when such a monomer unit is contained, the conjugated diene polymer of the present embodiment has a crosslinkable unsaturated group.

A content of the monomer unit having an unsaturated group in the conjugated diene polymer of the present embodiment is closely related to an iodine value.

When the content of the monomer unit having an unsaturated group such as a conjugated diene monomer unit or myrcene is 10% by mass or more, the conjugated diene polymer of the present embodiment is excellent from the viewpoint of ease of crosslinking. On the other hand, when the content of the monomer unit having an unsaturated group is 10% by mass or more, the molecular weight between entangled portions tends to be easily set to be equal to or larger than a prescribed value, which is preferred from the viewpoint of the crack growth resistance. Besides, the Mooney viscosity is easily lowered, and hence this is preferred also from the viewpoint of processability of the conjugated diene polymer.

The content of the monomer unit having an unsaturated group such as a conjugated diene monomer unit or myrcene is more preferably 15% by mass or more, and further preferably 20% by mass or more.

The content of the monomer unit having an unsaturated group such as a conjugated diene monomer unit or myrcene is preferably 50% by mass or less, more preferably 40% by mass or less, and further preferably 30% by mass or less. Thus, weather resistance and aging resistance tend to be excellent.

The monomer unit having an unsaturated group such as a conjugated diene monomer unit or myrcene is preferably a conjugated diene monomer unit from the viewpoints of economic performance and productivity.

The content of the monomer unit having an unsaturated group in the conjugated diene polymer of the present embodiment can be measured by a NMR measurement method described in Examples below, and can be controlled to fall in the above-described numerical range by adjusting an amount of a monomer having an unsaturated group such as a conjugated diene monomer unit or myrcene described below to be added, and a hydrogenation rate of a conjugated diene monomer.

In the conjugated diene polymer of the present embodiment, assuming that the content of a structure represented by the following formula (1) is C1 mol%, that the content of a structure represented by the following formula (2) is C2 mol%, that the content of a structure represented by the following formula (3) is C3 mol%, and that the content of a structure represented by the following formula (4) is C4 mol%, a difference α between a value of (C2 + C4)/(C1 + C2 + C3 + C4) and a value of (C1 + C2)/(C1 + C2 + C3 + C4) is preferably 0.1 or less.

Here, the value of (C2 + C4)/(C1 + C2 + C3 + C4) means a hydrogenation rate, and the value of (C1 + C2)/(C1 + C2 + C3 + C4) means a 1,2-vinyl bond content before hydrogenation.

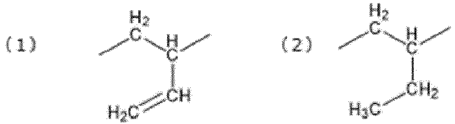

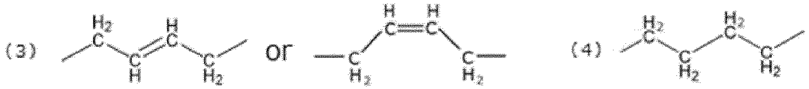

When the α is 0.1 or less, the conjugated diene polymer of the present embodiment is less entangled, and tends to exhibit excellent crack growth resistance in a rubber composition using the conjugated diene polymer of the present embodiment. The α is more preferably 0.09 or less, and further preferably 0.08 or less.

When the conjugated diene polymer of the present embodiment is a hydrogenated product, as for the hydrogenation rate, a hydrogenation rate of a structural unit derived from a conjugate diene compound, such as butadiene, is preferably 50 mol% or more, more preferably 60 mol% or more, and further preferably 65 mol% or more.

The hydrogenation rate is preferably 90 mol% or less, more preferably 85 mol% or less, and further preferably 80 mol% or less.

When the hydrogenation rate of the structural unit derived from a conjugated diene compound is 50 mol% or more in the conjugated diene polymer of the present embodiment, a vulcanizate thereof tends to be excellent in ozone resistance.

When the hydrogenation rate of the structural unit derived from a conjugated diene compound is 90 mol% or less, a crosslink density obtained after vulcanization is increased, and hence a vulcanizate thereof tends to be excellent in breaking strength and low fuel consumption performance.

The hydrogenation rate of the conjugated diene polymer of the present embodiment can be controlled by adjusting an amount of hydrogen to be added to the structural unit derived from a conjugated diene compound.

A temperature of the hydrogenation reaction is not especially limited, and is preferably 60 to 105°C, and more preferably 70 to 100°C.

The hydrogenation rate can be measured by ¹H-NMR.

A hydrogenation rate of the conjugated diene polymer of the present embodiment, and intermolecular or intramolecular distributions of monomer units having an unsaturated group, such as an ethylene unit, a conjugated diene monomer unit, or myrcene, and a vinyl aromatic monomer unit or the like are not especially limited, and these may be even, uneven, or distributed.

### (Softener of Conjugated Diene Polymer)

The conjugated diene polymer of the present embodiment may contain a rubber softener if necessary.

A content of the rubber softener is preferably 30% by mass or less.

From the viewpoint of improving processability obtained in compounding an inorganic filler or the like in producing a tire, the amount of the rubber softener to be added in the conjugated diene polymer of the present embodiment is preferably 1 to 30% by mass.

When the conjugated diene polymer has a high molecular weight, for example, when the weight average molecular weight is over 1,000,000, the amount of the rubber softener to be added is preferably 15 to 30% by mass, and on the other hand, from the viewpoint of increasing the degree of freedom in amount of a filler to be compounded to obtain a rubber composition, the amount of the rubber softener to be added is preferably 1 to 15% by mass.

The content of the rubber softener in a rubber composition using the conjugated diene polymer of the present embodiment is more preferably 20% by mass or less, further preferably 10% by mass or less, and still further preferably 5% by mass or less from the viewpoint of inhibiting degradation over time otherwise caused in the form of a tire.

The rubber softener is not limited to the following, and examples include an extender oil, a low molecular weight conjugated diene polymer, and a resin, and from the viewpoints of processability, productivity, and economic performance, an extender oil is preferred. Besides, from the viewpoint of abrasion resistance of a rubber composition for a tire, a low molecular weight conjugated diene polymer capable of contributing to crosslinking is preferred for the rubber softener.

As a method for adding the rubber softener to the conjugated diene polymer of the present embodiment, although not limited to the following, a method in which the rubber softener is added to a solution of the conjugated diene polymer to be mixed, and the thus obtained polymer solution containing the rubber softener is subjected to desolvation is preferably employed.

Preferable examples of the softener include, but are not limited to, an aromatic oil, a naphthenic oil, and a paraffin oil.

Among these, from the viewpoint of environmental safety, and from the viewpoints of oil bleed prevention and wet grip performance of the rubber composition, an aroma substitute oil containing 3% by mass or less of polycyclic aromatic (PCA) component in accordance with the IP 346 method is preferred.

Examples of the aroma substitute oil include TDAE (treated distillate aromatic extract), MES (mild extraction solvate) and the like described in Kautschuk Gummi Kunststoffe 52(12) 799 (1999) as well as RAE (residual aromatic extract).

### (Other Additives)

The conjugated diene polymer of the present embodiment may contain various additives such as an antioxidant if necessary.

### [Method for Producing Conjugated Diene Polymer]

As an example of a method for producing a conjugated diene polymer of the present embodiment, for example, a conjugated diene compound and a vinyl aromatic compound are copolymerized, and the resultant conjugated diene polymer is hydrogenated if necessary.

In general, when the molecular weight between entangled portions of polybutadiene and the molecular weight between entangled portions of polystyrene are compared, that of polystyrene is higher. A monomer ratio in a conjugated diene polymer has the same tendency, and as the vinyl aromatic monomer unit content is increased, the molecular weight between entangled portions increases. On the other hand, regarding the binding mode of a conjugated diene monomer, when the conjugated diene monomer is polymerized via a 1,2- or 3,4-bond (what is called a vinyl bond), the molecular weight between entangled portions tends to be higher as compared with that obtained via a 1,4-bond. Besides, when hydrogenation is performed, the molecular weight between entangled portions increases as compared with that obtained when hydrogenation is not performed.

Considering these facts, for controlling the molecular weight between entangled portions, it is suitable to adjust the vinyl aromatic monomer unit content, the vinyl bond content of a conjugated diene monomer, and the hydrogenation rate. These elements affect other characteristics of the conjugated diene polymer needless to say, and therefore, the conjugated diene polymer is preferably designed in consideration of balance with desired performances. For example, when the vinyl aromatic monomer unit content is set to be large, the molecular weight between entangled portions can be increased even if the hydrogenation rate is low. On the contrary, in a conjugated diene polymer having a small vinyl aromatic monomer unit content, the molecular weight between entangled portions tends to satisfy requirements of the present embodiment by setting the vinyl bond content and the hydrogenation rate to be high.

When constituent elements of the conjugated diene polymer of the present embodiment are 1,3-butadiene of a conjugated diene compound, and styrene of a vinyl aromatic compound, the ratio of the styrene in polymerized monomers is 1% by mass or more and 18% by mass or less. For controlling the molecular weight between entangled portions of the conjugated diene polymer to fall in a desired range, the ratio of the styrene is preferably 10% by mass or more, and more preferably 15% by mass or more. When the styrene amount is controlled to fall in this range, there is a tendency that the breaking strength can be improved with the crack growth resistance of a rubber composition improved.

In the method for producing a conjugated diene polymer of the present embodiment, anionic polymerization is preferably performed in the polymerization step from the viewpoint that the molecular structure is thus easily controlled. Besides, a part of or most of double bonds in a conjugated diene polymer obtained by polymerizing at least a conjugated diene monomer are preferably hydrogenated.

An example of the method for producing a conjugated diene polymer of the present embodiment includes a method in which hydrogenation is performed after a conjugated diene monomer is polymerized by anionic polymerization, or copolymerized with an additional monomer if necessary with various additives under various conditions as described in, for example, International Publication No. WO96/05250, Japanese Patent Laid-Open No. 2000-053706, and International Publication Nos. WO2003/085010, WO2019/151126, WO2019/151127, WO2002/002663, and WO2015/006179.

As a vinyl aromatic compound, ethylene, α-olefin, a conjugated diene compound, and another monomer to be used in the polymerization in the method for producing a conjugated diene polymer of the present embodiment, the same ones as those described in the aforementioned various literatures can be used.

Each of the polymerization step and the hydrogenation step may be performed by either of a batch method and a continuous method.

### (Polymerization Step)

In the polymerization step, a conjugated diene compound, a vinyl aromatic compound, and another monomer used if necessary are polymerized with a polymerization initiator used.

An example of the polymerization initiator used in the polymerization step includes an organomonolithium compound.

Examples of the organomonolithium compound include, but are not limited to, a low molecular weight compound, and an organomonolithium compound of a solubilized oligomer.

Examples of the organomonolithium compound include, with respect to a binding mode between the organic group and the lithium, a compound having a carbon-lithium bond, a compound having a nitrogen-lithium bond, and a compound having a tin-lithium bond.

An amount of the organomonolithium compound to be used as the polymerization initiator is determined preferably in accordance with the structure and the molecular weight of the conjugated diene polymer of the present embodiment to be obtained.

An amount of a monomer such as a conjugated diene compound to be used with respect to the amount of the polymerization initiator to be used relates to a degree of polymerization of the conjugated diene polymer, namely, relates to a number average molecular weight and/or the weight average molecular weight of the conjugated diene polymer.

Accordingly, in order to increase the molecular weight, adjustment may be made to reduce the amount of the polymerization initiator to be used, and in order to reduce the molecular weight, adjustment may be made to increase the amount of the polymerization initiator to be used.

The organomonolithium compound used as the polymerization initiator is preferably an alkyllithium compound having a substituted amino group, or dialkylaminolithium from the viewpoint that it is used as a method for introducing a nitrogen atom into the conjugated diene polymer.

In this case, a conjugated diene polymer having, at a polymerization starting terminal, a nitrogen atom of an amino group is obtained.

A substituted amino group refers to an amino group not having active hydrogen, or having a structure in which active hydrogen is protected.

Examples of an alkyllithium compound having an amino group not having active hydrogen include, but are not limited to, 3-dimethylaminopropyllithium, 3-diethylaminopropyllithium, 4-(methylpropylamino)butyllithium, and 4-hexamethyleneimino butyllithium.

Examples of an alkyllithium compound having an amino group with a structure in which active hydrogen is protected include, but are not limited to, 3-bistrimethylsilylamino propyllithium, and 4-trimethylsilylmethylamino butyllithium.

Examples of dialkylaminolithium include, but are not limited to, lithium dimethylamide, lithium diethylamide, lithium dipropylamide, lithium dibutylamide, lithium din-hexylamide, lithium diheptylamide, lithium diisopropylamide, lithium dioctylamide, lithium-di-2-ethylhexylamide, lithium didecylamide, lithium ethylpropylamide, lithium ethylbutylamide, lithium ethylbenzylamide, lithium methylphenethylamide, lithium hexamethyleneimide, lithium pyrrolidide, lithium piperidide, lithium heptamethyleneimide, lithium morpholide, 1-lithio-azacyclooctane, 6-lithio-1,3,3-trimethyl-6-azabicyclo[3.2.1]octane, and 1-lithio-1,2,3,6-tetrahydropyridine.

Such an organomonolithium compound having a substituted amino group can be used in the form of an organomonolithium compound of a solubilized oligomer obtained by reacting a small amount of a polymerizable monomer, such as a monomer of 1,3-butadiene, isoprene, or styrene.

The organomonolithium compound used as the polymerization initiator is preferably an alkyllithium compound from the viewpoints of industrial availability and polymerization reaction controllability. In this case, a conjugated diene polymer having an alkyl group at a polymerization starting terminal is obtained.

Examples of the alkyllithium compound include, but are not limited to, n-butyllithium, sec-butyllithium, tert-butyllithium, n-hexyllithium, benzyllithium, phenyllithium, and stilbene lithium.

The alkyllithium compound is preferably n-butyllithium or sec-butyllithium from the viewpoints of industrial availability and polymerization reaction controllability.

One of the above-described organomonolithium compounds may be used, or two or more of these may be used together. Alternatively, another organic metal compound may be used together.

Examples of another organic metal compound include alkaline earth metal compounds, other alkali metal compounds, and other organic metal compounds.

Examples of the alkaline earth metal compounds include, but are not limited to, organomagnesium compounds, organocalcium compounds, and organic strontium compounds. Other examples include alkoxide, sulfonate, carbonate and amide compounds of alkaline earth metals.

Examples of the organomagnesium compounds include dibutylmagnesium, and ethylbutylmagnesium.

Examples of the other organic metal compounds include organoaluminum compounds.

Examples of a polymerization reaction mode employed in the polymerization step include, but are not limited to, polymerization reaction modes of a batch method and a continuous method.

In the continuous method, one or a series of two or more reactors can be used. As a reactor used in the continuous method, for example, a tank or tubular reactor equipped with a stirrer is used.

In the continuous method, a monomer, an inert solvent, and a polymerization initiator are preferably continuously fed to the reactor, a polymer solution containing a polymer is obtained in the reactor, and the polymer solution is continuously discharged.

As a reactor used in the batch method, for example, a tank reactor equipped with a stirrer is used.

In the batch method, a monomer, an inert solvent, and a polymerization initiator are preferably fed to the reactor, a monomer is continuously or intermittently added during polymerization if necessary, a polymer solution is obtained in the reactor, and the polymer solution is discharged after completing the polymerization.

In the method for producing a conjugated diene polymer of the present embodiment, for obtaining a polymer having an active terminal at a high ratio, the continuous method capable of continuously discharging a polymer to be supplied to a next reaction in a short period of time is preferably employed.

In the polymerization step of the conjugated diene polymer of the present embodiment, polymerization is performed preferably in an inert solvent.

Examples of the inert solvent include, but are not limited to, hydrocarbon-based solvents such as a saturated hydrocarbon, and an aromatic hydrocarbon.

Examples of the hydrocarbon-based solvents include, but are not limited to, aliphatic hydrocarbons such as butane, pentane, hexane, and heptane; alicyclic hydrocarbons such as cyclopentane, cyclohexane, methylcyclopentane, and methylcyclohexane; aromatic hydrocarbons such as benzene, toluene, and xylene, and a hydrocarbon containing a mixture of these.

Before performing the polymerization step, arenes and acetylenes, that is, impurities, are preferably treated with an organic metal compound because a conjugated diene polymer having an active terminal at a high concentration tends to be thus obtained, and a conjugated diene polymer having a high modification ratio tends to be thus obtained through a modification step.

In the polymerization step, a polar compound may be added. Thus, a vinyl aromatic compound and a conjugated diene compound can be randomly copolymerized. A polar compound tends to be able to be used as a vinylizing agent for controlling a microstructure of a conjugated diene portion. Besides, it tends to also have an effect of accelerating the polymerization reaction.

Examples of the polar compound include, but are not limited to, ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, and 2,2-bis(2-oxolanyl)propane; tertiary amine compounds such as tetramethylethylenediamine, dipiperidinoethane, trimethylamine, triethylamine, pyridine, and quinuclidine; alkali metal alkoxide compounds such as potassium-tert-amylate, potassium-tert-butylate, sodium-tert-butylate, and sodium amylate; and phosphine compounds such as triphenylphosphine.

One of these polar compounds may be used, or two or more of these may be used together.

An amount of the polar compound to be used is not especially limited, and can be selected depending on purposes and the like, and is preferably 0.01 moles or more and 10 moles or less per mole of the polymerization initiator.

When the polar compound is added in an amount ranging from 0.01 moles or more to 10 moles or less per mole of the polymerization initiator, the 1,2-vinyl bond content in the conjugated diene polymer increases whereas the 1,4-vinyl bond content decreases on the contrary. When the 1,2-vinyl bond content in the conjugated diene polymer is thus large, the molecular weight between entangled portions tends to easily increase, and even when the vinyl aromatic monomer unit content is comparatively small, there is a tendency that the molecular weight between entangled portions of the conjugated diene polymer of the present embodiment can be easily controlled to fall in a numerical range of 2,400 g/mol or more and 3,000 g/mol or less. There is a tendency that a vulcanizate having excellent crack growth resistance and low fuel consumption performance can be obtained from the conjugated diene polymer having a small vinyl aromatic monomer unit content and a large 1,2-vinyl bond content thus obtained.

Such a polar compound (vinylizing agent) can be used as an agent for adjusting a microstructure of a conjugated diene portion of the conjugated diene polymer in an appropriate amount in accordance with a desired 1,2-vinyl bond content. Many of polar compounds simultaneously have an effective randomization function in copolymerization of a conjugated diene compound and a vinyl aromatic compound, and tend to be usable as an agent for adjusting a distribution of the vinyl aromatic compound and adjusting a styrene block content.

As a randomizing method in copolymerization of a conjugated diene compound and a vinyl aromatic compound, as described in, for example, Japanese Patent Laid-Open No. 59-140211, a method in which a copolymerization reaction is started between an entire amount of styrene and a part of 1,3-butadiene, and the rest of 1,3-butadiene is intermittently added during the copolymerization reaction can be employed.

A polymerization temperature employed in the polymerization step is preferably a temperature at which living anionic polymerization proceeds, and from the viewpoint of productivity, is more preferably 0°C or more, preferably 120°C or less, and more preferably 50°C or more and 100°C or less. When the temperature within such a temperature range is employed, a reaction amount of a modifier on an active terminal obtained after completing the polymerization tends to be able to be sufficiently ensured.

### (Branching Step)

In the method for producing a conjugated diene polymer of the present embodiment, a step of adjusting a branch number of the conjugated diene polymer may be further performed.

An example of a method for increasing the branch number of the conjugated diene polymer includes a method in which a compound derived from a vinyl-based monomer and containing an alkoxysilyl group and/or a halosilyl group, namely, a branching agent, is used.

When a branching agent is added during the polymerization step, and thereafter, a monomer is added to continue the polymerization reaction, a polymer chain branched at a branch point can be elongated. Thereafter, a modifier, a coupling agent or the like may be added to perform a modification process.

### (Modification Step)

A modification step with the above-described coupling agent, or a modifier having a nitrogen atom-containing group is performed on an active terminal of a polymer obtained through the above-described polymerization step, and the branching step with a prescribed branching agent performed if necessary.

### (Deactivating Agent, and Neutralizer)

In the method for producing a conjugated diene polymer of the present embodiment, a deactivating agent, a neutralizer and the like may be added to the polymer solution if necessary after the modification step.

Examples of the deactivating agent include, but are not limited to, water; and alcohols such as methanol, ethanol, and isopropanol.

Examples of the neutralizer include, but are not limited to, carboxylic acids such as stearic acid, oleic acid, and versatic acid (carboxylic acid mixture having 9 to 11 carbon atoms, mainly 10 carbon atoms, and having many branches); an aqueous solution of an inorganic acid, and carbon dioxide gas.

### (Hydrogenation Step)

The method for producing a conjugated diene polymer of the present embodiment is not especially limited, and may include a hydrogenation step of hydrogenating the conjugated diene polymer to achieve a hydrogenation rate of 50 mol% or more and 90% or less as described above.

The hydrogenation rate can be controlled by adjusting, for example, an amount of hydrogen used in hydrogenation, and a hydrogenation speed can be controlled by adjusting, for example, a hydrogen feed amount, a pressure, a temperature, and the like. The hydrogenation rate of a conjugated diene polymer can be measured by proton nuclear magnetic resonance (¹H-NMR).

### (Addition of Rubber Stabilizer)

In the method for producing a conjugated diene polymer of the present embodiment, a rubber stabilizer is preferably added from the viewpoints of prevention of gel formation after the polymerization and improving stability in processing.

As the rubber stabilizer, any of known stabilizers can be used, and examples include, but are not limited to, antioxidants such as 2,6-di-tert-butyl-4-hydroxytoluene (hereinafter sometimes referred to as "BHT"), n-octadecyl-3-(4'-hydroxy-3',5'-di-tertbutylphenol) propionate, and 2-methyl-4,6-bis[(octylthio)methyl]phenol.

### (Desolvation Step)

In the method for producing a conjugated diene polymer of the present embodiment, as a method for obtaining the resultant polymer from the polymer solution, any of known methods can be employed. The method is not especially limited, and examples include a method in which the polymer is filtered after separating a solvent by steam stripping or the like, and the resultant is dehydrated and dried to obtain the polymer, a method in which the polymer solution is concentrated with a flushing tank, and the resultant is devolatilized with a vent extruder, and a method in which devolatilization is directly performed with a drum dryer or the like.

### [Rubber Composition]

A rubber composition of the present embodiment contains 100 parts by mass of a rubber component containing 30 parts by mass or more of the conjugated diene polymer of the present embodiment described above, and 30 parts by mass or more of a natural rubber; and 30 parts by mass or more of carbon black.

Owing to the above-described configuration, the rubber composition of the present embodiment is excellent in balance between elongation at break and crack growth resistance.

The rubber composition of the present embodiment may further contain an additional rubber in addition to the conjugated diene polymer of the present embodiment described above. The conjugated diene polymer of the present embodiment, the natural rubber, and the additional rubber are together described as the rubber component in some cases.

### (Carbon Black)

The carbon black is not especially limited, and for example, carbon blacks of SRF, FEF, HAF, ISAF and SAF classes can be used. Among these, a carbon black having a nitrogen adsorption specific surface area of 50 m²/g or more and dibutyl phthalate (DBP) oil absorption of 80 mL/100 g or more is preferably used from the viewpoints of extrusion moldability and a rolling resistance property.

The content of the carbon black is, from the viewpoint of the breaking strength of the rubber composition, preferably 30 parts by mass or more, more preferably 40 parts by mass or more, and further preferably 50 parts by mass or more based on 100 parts by mass of the rubber component. From the viewpoint of improving the low fuel consumption performance of the rubber composition, the content is preferably 100 parts by mass or less, more preferably 90 parts by mass or less, and further preferably 80 parts by mass or less.

The content of the natural rubber in the rubber composition of the present embodiment is preferably 30 parts by mass or more based on 100 parts by mass of the rubber component. From the viewpoint of the tear strength of a vulcanizate obtained therefrom, the content is more preferably 40 parts by mass or more, and further preferably 50 parts by mass or more.

The content of the conjugated diene polymer in the rubber composition of the present embodiment is preferably 30 parts by mass or more based on 100 parts by mass of the rubber component. From the viewpoint of the ozone resistance of a vulcanizate obtained therefrom, the content is more preferably 40 parts by mass or more, and further preferably 50 parts by mass or more.

The additional rubber is not especially limited, and can be appropriately selected in accordance with the purpose of the rubber composition. Examples include a styrene-butadiene rubber (of emulsion polymerization type or solution polymerization type), polyisoprene, a butadiene rubber (high cis polybutadiene, low cis polybutadiene, syndiotactic-1,2-polybutadiene, an acrylonitrile-butadiene rubber (NBR)), a chloroprene rubber, ethylene-α-olefin copolymer rubbers such as an ethylene-propylene rubber (EPM), an ethylene-propylene-diene rubber (EPDM), a butyl rubber, a polysulfide rubber, a silicone rubber, a fluororubber, and a urethane rubber.

One of these additional rubbers may be used, or a mixture of two or more of these may be used.

As a method for mixing the additional rubber, it may be mixed in a dry state after the polymerization of the conjugated diene polymer, or may be mixed in a solution state during the polymerization of the conjugated diene polymer.

The rubber composition of the present embodiment may contain a crosslinking agent.

A content of the crosslinking agent in the rubber composition of the present embodiment is preferably 0.1 parts by mass or more and 20 parts by mass or less based on 100 parts by mass of the rubber component. From the viewpoints of high tensile strength and a high crosslinking speed in the rubber composition, the content is preferably 0.1 parts by mass or more, more preferably 0.5 parts by mass or more, and further preferably 1.5 parts by mass or more. On the other hand, from the viewpoints of inhibition of uneven crosslinking and high tensile strength, the content is preferably 20 parts by mass or less, more preferably 5 parts by mass or less, and further preferably 3 parts by mass or less.

The crosslinking agent is not especially limited, and can be appropriately selected depending on purposes, and examples include a sulfur-based crosslinking agent, an organic peroxide-based crosslinking agent, an inorganic crosslinking agent, a polyamine crosslinking agent, a resin crosslinking agent, a sulfur compound-based crosslinking agent, and an oxime-nitrosamine-based crosslinking agent. One of these may be used, or two or more of these may be used together.

When the rubber composition of the present embodiment is used in a composition for a tire, a sulfur-based crosslinking agent (vulcanizing agent) is more preferred among these. In particular, sulfur is further preferred.

In the rubber composition of the present embodiment, a vulcanizing agent may be contained, and a vulcanization accelerator may be further used together.

Examples of the vulcanization accelerator include, but are not limited to, guanidine-based, aldehyde-aminebased, aldehyde-ammonia-based, thiazole-based, sulfenamide-based, thiourea-based, thiuram-based, dithiocarbamate-based, and xanthate-based compounds.

The rubber composition of the present embodiment may contain various additives different from those described above, such as an additional softener, a filler, a heat stabilizer, an antistatic agent, a weathering stabilizer, an anti-aging agent, a colorant, and a lubricant.

As the additional softener, any of known softeners can be used.

Examples of the additional filler include, but are not limited to, calcium carbonate, magnesium carbonate, aluminum sulfate, and barium sulfate.

As the heat stabilizer, the antistatic agent, the weathering stabilizer, the anti-aging agent, the colorant, and the lubricant, any of known materials can be respectively used.

### (Vulcanizate)

The rubber composition of the present embodiment is used suitably in the form of a vulcanizate. When the rubber composition containing a natural rubber and carbon black is vulcanized, a vulcanizate having excellent breaking strength can be inexpensively obtained.

The vulcanizate may contain, in addition to the conjugated diene polymer of the present embodiment, the natural rubber, and the carbon black, an inorganic filler such as silica, a rubber component used in addition to the conjugated diene polymer and the natural rubber, a silane coupling agent, a rubber softener, a wax, a vulcanizing agent, a vulcanization accelerator, and a vulcanization aid, and can be obtained by mixing these to obtain a rubber composition, and vulcanizing the rubber composition by heating.

A method for identifying the type or a content ratio of the rubber component contained in the rubber composition of the present embodiment is not especially limited, and an example includes an identification method employing NMR.

For example, as described in a prior literature (JSR TECHNICAL REVIEW No. 126/2019), ratios of a styrene unit, a 1,2-vinyl bond content, 1,4-vinyl bond content, a 1,4-cis bond content, and an isoprene unit contained in a rubber composition can be quantitatively calculated by employing solid ¹³C-NMR.

### (Silica)

The rubber composition of the present embodiment can contain silica.

The content of silica in the rubber composition is preferably 30 parts by mass or more and 100 parts by mass or less based on 100 parts by mass of the rubber component containing the conjugated diene polymer of the present embodiment and the natural rubber.

The silica content is preferably 60 parts by mass or more, more preferably 65 parts by mass or more, and further preferably 75 parts by mass or more based on 100 parts by mass of the rubber component from the viewpoint of improvement of grip performance and steering stability obtained when the rubber composition of the present embodiment is used in a tire. From the viewpoint of improvement of low fuel consumption performance obtained in use in a tire, the silica content is preferably 100 parts by mass or less, more preferably 90 parts by mass or less, and further preferably 80 parts by mass or less.

The silica is not especially limited, and any of known ones can be used, and it is preferably a solid particle containing SiO₂ or Si₃Al as a constituent unit, and more preferably a solid particle containing SiO₂ or Si₃Al as a principal component of a constituent element. Here, a principal component refers to a component contained in the silica in an amount of 50% by mass or more, preferably 70% by mass or more, and further preferably 80% by mass or more.

Examples of the silica include, but are not limited to, silicon dioxide, clay, talc, mica, diatomite, wollastonite, montmorillonite, zeolite, and inorganic fibrous substances such as glass fiber.

An example of commercially available silica includes trade name "Ultrasil 7000GR" manufactured by Evonik Degussa.

As the silica, a silica-based inorganic filler having a hydrophobized surface can be used, and the silica-based inorganic filler may be used together with a non-silica-based inorganic filler.

Among these, from the viewpoints of strength and abrasion resistance, silicon dioxide and glass fiber are preferred, and silicon dioxide is more preferred.

Examples of the silica include dry silica, wet silica, and synthetic silicate silica. Among these, wet silica is more preferred from the viewpoints of an improving effect of a fracture property, and excellent balance of wet grip performance.

When a silica-based inorganic filler is contained in the rubber composition of the present embodiment, from the viewpoint of obtaining practically favorable abrasion resistance and fracture property, a nitrogen adsorption specific surface area, obtained by the BET adsorption method, of the silica-based inorganic filler is preferably 100 m²/g or more and 300 m²/g or less, and more preferably 170 m²/g or more and 250 m²/g or less.

If necessary, a silica-based inorganic filler having a comparatively small specific surface area (for example, a specific surface area of less than 200 m²/g) and a silica-based inorganic filler having a comparatively large specific surface area (of, for example 200 m²/g or more) can be used in combination. Thus, favorable abrasion resistance and fracture property can be highly balanced with a fuel saving property.

### (Silane Coupling Agent)

The rubber composition of the present embodiment may contain a silane coupling agent from the viewpoints of improvement of dispersibility of a filler and improvement of tensile strength of a crosslinked product.

The silane coupling agent is preferably a compound having a function to make close interaction between a rubber component and an inorganic filler, having a group with affinity with or a binding property to each of the rubber component and the filler, and having, in one molecule, a sulfur bond portion and an alkoxysilyl group or silanol group portion.

Examples of such a compound include, but are not limited to, bis-[3-(triethoxysilyl)-propyl]-tetrasulfide, bis-[3-(triethoxysilyl)-propyl]-disulfide, bis-[2-(triethoxysilyl)-ethyl]-tetrasulfide, S-[3-(triethoxysilyl)propyl]octanethioate, a condensate of S-[3-(triethoxysilyl)-propyl]octanethioate and

[(triethoxysilyl)-propyl]thiol, mercaptosilane having at least one thiol functional group (-SH), and a silane carrying at least one masked thiol group.

A content of the silane coupling agent in the rubber composition of the present embodiment is preferably 0.1 parts by mass or more, more preferably 0.5 parts by mass or more, and further preferably 1.0 part by mass or more based on 100 parts by mass of the rubber component including the conjugated diene polymer of the present embodiment and the natural rubber. The content is preferably 30 parts by mass or less, more preferably 20 parts by mass or less, and further preferably 15 parts by mass or less.

When the content of the silane coupling agent falls in the above-described range, the effect of adding the silane coupling agent tends to be further remarkably exhibited.

### (Softener)

The rubber composition of the present embodiment preferably contains 100 parts by mass of the rubber component including the conjugated diene polymer of the present embodiment and the natural rubber, and 1 part by mass or more and 60 parts by mass or less of a softener.

The softener is not especially limited, and examples include an extender oil, a low molecular weight conjugated diene polymer, and a resin, and an extender oil is preferred from the viewpoints of processability, productivity, and economic performance. Besides, from the viewpoint of abrasion resistance of a rubber composition for use in a tire, a low molecular weight conjugated diene polymer capable of contributing to crosslinking is preferred.

Preferable examples of the softener include, but are not limited to, an aromatic oil, a naphthenic oil, and a paraffin oil.

Among these, from the viewpoint of environmental safety, and from the viewpoints of oil bleed prevention and wet grip performance, an aroma substitute oil containing 3% by mass or less of polycyclic aromatic (PCA) component in accordance with the IP 346 method is preferred.

Examples of the aroma substitute oil include TDAE (treated distillate aromatic extract) and MES (mild extraction solvate) and the like described in Kautschuk Gummi Kunststoffe 52(12) 799 (1999) as well as RAE (residual aromatic extract).

A content of the softener in the rubber composition of the present embodiment is preferably 1 part by mass or more, more preferably 5 parts by mass or more, and further preferably 10 parts by mass or more based on 100 parts by mass of the rubber component from the viewpoint of processability. From the viewpoint of abrasion resistance, the content is preferably 60 parts by mass or less, more preferably 50 parts by mass or less, and further preferably 40 parts by mass or less.

### (Method for Producing Rubber Composition)

The rubber composition of the present embodiment can be produced by mixing a rubber component containing the conjugated diene polymer of the present embodiment, a natural rubber, and an additional rubber with carbon black, silica, and another filler, a crosslinking agent, a silane coupling agent, and additives such as a softener.

Examples of a method for mixing a rubber component containing the conjugated diene polymer of the present embodiment, the natural rubber, and the additional rubber with a crosslinking agent, silica, carbon black and another filler, a silane coupling agent, and additives such as a softener include, but are not limited to, a melt kneading method using a general mixer such as an open roll, a Banbury mixer, a kneader, a single screw extruder, a double screw extruder, or a multi-screw extruder, and a method in which the respective components are dissolved to be mixed, and then a solvent is removed by heating.

Among these methods, a melt kneading method using a roll, a Banbury mixer, a kneader, or an extruder is preferred from the viewpoints of productivity and favorable kneadability. Besides, either of a method in which the rubber component, a filler, a silane coupling agent, and an additive are kneaded all at once, and a method in which these are mixed dividedly plural times is applicable.

### [Application]

The rubber component of the present embodiment is used, preferably in the form of a crosslinking rubber composition, in a member for a tire, interiors and exteriors of vehicles, anti-vibration rubbers, belts, shoes, foam bodies, and various industrial products.

Among these, it is suitably used in the member for the tire.

Examples of the member for the tire include various tires such as a fuel efficient tire, an all-season tire, a high performance tire, a snow tire, and a studless tire; and various portions of a tire such as a tire tread, a carcass, a sidewall, and a bead portion.

In particular, the rubber composition of the present embodiment is excellent in balance among the crack growth resistance, the low fuel consumption performance, and the elongation at break obtained when formed into a vulcanizate, and therefore, is suitably used as a material of a tire tread or a sidewall of a fuel efficient tire.

As a method for producing a tire, a known method can be employed. For example, at least one member usually used for production of a tire, such as a carcass layer, a belt layer, and a tread layer selected from the group consisting of a crosslinking rubber composition before vulcanization and a cord, are successively overlayed on a tire forming drum to adhere to one another, and the drum is pulled out to obtain a green tire. Subsequently, the green tire is vulcanized by heating by an ordinary method, and thus, a desired tire (such as a pneumatic tire) can be produced.

### Examples

The present embodiment will now be described in more detail with reference to specific examples and comparative examples, and it is noted that the present embodiment is not limited by the following examples and comparative examples at all.

Various physical properties of the examples and comparative examples were measured by the following methods.

### (Microstructure of Butadiene Portion (1,2-vinyl Bond Content) of Conjugated Diene Polymer before Hydrogenation)

50 mg of a conjugated diene polymer before hydrogenation was dissolved in 10 mL of carbon disulfide to obtain a measurement sample.

An infrared spectrum was measured in a range of 600 to 1000 cm⁻¹ with a solution cell used, and based on an absorbance at a prescribed wavelength, a microstructure of a butadiene portion, namely, a 1,2-vinyl bond content (% by mol), was obtained in accordance with an equation of Hampton's method (a method described in R. R. Hampton, Analytical Chemistry 21, 923 (1949)). As a measuring apparatus, Fourier transform infrared spectrophotometer "FT-IR230" manufactured by JASCO Corporation was used.

### (Weight Average Molecular Weight of Conjugated Diene Polymer)

A chromatogram was measured with a GPC measuring apparatus including a series of three columns using a polystyrene-based gel as a filler, and a weight average molecular weight of a conjugated diene polymer was obtained based on a calibration curve obtained using standard polystyrene.

As an eluent, THF (tetrahydrofuran) containing 5 mmol/L triethylamine was used.

As columns, a guard column: trade name "TSKguardcolumn Super H-H" manufactured by Tosoh Corporation, and columns: trade names "TSKgel Super H5000", "TSKgel Super H6000", and "TSKgel Super H7000" manufactured by Tosoh Corporation were used.

Under conditions of an oven temperature of 40°C and a THF flow rate of 0.6 mL/min, an RI detector (trade name "HLC8020" manufactured by Tosoh Corporation) was used.

A measurement solution was prepared by dissolving 10 mg of a measurement sample in 20 mL of THF, and 20 µL of the measurement solution was injected into the GPC measuring apparatus for measurement.

### (Modification Ratio of Conjugated Diene Polymer)

A modification ratio of a conjugated diene polymer was measured by column adsorption GPC as follows. The measurement was performed by utilizing a characteristic that a conjugated diene polymer modified with a nitrogen atom-containing functional group adsorbs onto a column.

A sample solution containing a sample and low molecular weight internal standard polystyrene was measured for an amount of adsorption to a silica-based column based on a difference between a chromatogram measured with a polystyrene-based column and a chromatogram measured with the silica-based column, and thus, a modification ratio was obtained.

Specifically, the measurement was performed as follows.

### <Preparation of Sample Solution>:

A sample solution was obtained by dissolving 10 mg of a sample and 5 mg of standard polystyrene in 20 mL of THF.

### <GPC Measurement Conditions Using Polystyrene Column>

THF containing 5 mmol/L triethylamine was used as an eluent, and 20 µL of the sample solution was injected into an apparatus for measurement. As columns, a guard column: trade name "TSKguardcolumn Super H-H" manufactured by Tosoh Corporation and columns: trade names "TSKgel Super H5000", "TSKgel Super H6000", and "TSKgel Super H7000" manufactured by Tosoh Corporation were used. Under conditions of an oven temperature of 40°C and a THF flow rate of 0.6 mL/min, an RI detector (trade name "HLC8020" manufactured by Tosoh Corporation) was used for the measurement to obtain a chromatogram.

### <GPC Measurement Conditions Using Silica-based Column>:

An apparatus, trade name "HLC-8320GPC" manufactured by Tosoh Corporation was used, THF was used as an eluent, and 50 µL of a sample solution was injected into the apparatus. Under conditions of an oven temperature of 40°C and a THF flow rate of 0.5 mL/min, an RI detector was used to obtain a chromatogram. As columns, trade names "Zorbax PSM-1000S", "PSM-300S", and "PSM-60S" connected to one another were used, and a column, trade name "DIOL 4.6 × 12.5 mm 5 micron" was connected as a guard column at a previous stage.

### <Calculation Method for Modification Ratio>:

A modification ratio (%) was obtained in accordance with the following expression assuming that a whole peak area of the chromatogram obtained with the polystyrene-based column is 100, that a peak area of the sample is P1, that a peak area of the standard polystyrene is P2, that a whole peak area of the chromatogram obtained with the silica-based column is 100, that a peak area of the sample is P3, and that a peak area of the standard polystyrene is P4: Modification ratio (%) = [1 - (P2 × P3)/(P1× P4)] × 100 (wherein P1 + P2 = P3 + P4 = 100)

### (Hydrogenation Rate of Conjugated Diene Polymer)

A large amount of methanol was added to a reaction solution of a conjugated diene polymer after a hydrogenation reaction, and thus, a conjugated diene polymer before hydrogenation and a hydrogenated conjugated diene polymer were precipitated to be collected.

Subsequently, the hydrogenated conjugated diene polymer was extracted with acetone, and the resultant hydrogenated conjugated diene polymer was vacuum dried.

The resultant was used as a sample of ¹H-NMR measurement to measure a hydrogenation rate.

Conditions for the ¹H-NMR measurement were as follows:

### <Measurement Conditions>

Apparatus: JNM-LA400 (manufactured by JEOL Ltd.)
Solvent: deuterated chloroform
Measurement sample: substance sampled before and after hydrogenation of polymer
Sample concentration: 50 mg/mL
Observation frequency: 400 MHz
Chemical shift reference: TMS (tetramethylsilane)
Pulse delay: 2.904 sec
Number of scans: 64
Pulse width: 45°
Measurement temperature: 26°C

### (Styrene Content (% by mass) in Conjugated Diene Polymer)

A conjugated diene polymer was used as a sample, and 100 mg of the sample was dissolved and diluted to 100 mL with chloroform to obtain a measurement sample. Based on an amount of adsorption by a phenyl group of styrene at an ultraviolet adsorption wavelength (about 254 nm), a styrene content (% by mass) in the sample was measured (measuring apparatus: spectrophotometer "UV-2450" manufactured by Shimadzu Corporation).

### (Glass Transition Temperature (°C) of Conjugated Diene Polymer)

A conjugated diene polymer was used as a sample, and the glass transition temperature thereof was measured with a differential scanning calorimeter in accordance with JIS K6240.

### (Nitrogen Content in Conjugated Diene Polymer)

A conjugated diene polymer was used as a sample, and the nitrogen content therein was measured with a trace nitrogen analyzer (TN-2100H, Nittoseiko Analytech Co., Ltd.) .

### (Mooney Viscosity (ML) of Conjugated Diene Polymer)

A conjugated diene polymer was used as a sample, and the Mooney viscosity thereof was measured in accordance with a method prescribed in ISO 289.

In Tables 1 to 3 below, a value of the Mooney viscosity measured at 100°C is shown as ML.

### (Mooney Stress Relaxation (MSR) of Conjugated Diene Polymer)

A conjugated diene polymer was used as a sample, and after measuring the Mooney viscosity (ML) at 100°C, the rotation of the rotor was stopped to measure decrease of the torque applied to the rotor for 30 seconds.

A relaxation time and decrease of the value of the Mooney viscosity were log-log plotted, and the inclination was calculated as the Mooney stress relaxation (MSR).

### (Cold Flow Property of Conjugated Diene Polymer (Evaluation 1))

A conjugated diene polymer was used as a sample, and a cubic sample of 10 by 10 cm square was cut out as an evaluation sample.

A 1 kg weight was placed on the evaluation sample, and the resultant was allowed to stand for 30 minutes. A change ratio of the heights of the evaluation sample measured before and after placing the weight for 30 minutes was evaluated as the cold flow property in accordance with the following criteria:
○: The height change ratio was less than 10%.
△: The height change ratio was 10% or more and less than 15%.
×: The height change ratio was 15% or more.

From the viewpoint of molding retention during the storage of the conjugated diene polymer, the evaluation result of ○ is preferred, and the evaluation result of △ is secondly preferred.

### (Molecular Weight between Entangled Portions of Conjugated Diene Polymer)

A conjugated diene polymer was used as a sample, and an elastic modulus Gn at 27°C was measured with ARES-G2 manufactured by TA Instrument.

Based on the thus obtained elastic modulus Gn and the following expression, the molecular weight between entangled portions was calculated.
molecular weight between entangled portions = cRT/Gn
c: 0.9 × 10⁶ (g/m³)
R: 8.31 (J/K/mol)
T: 300 (K)
Gn: elastic modulus (Pa) measured with ARES

### <Measurement Conditions with ARSE-G2>

mode: compression mode
strain: 0.05%
frequency: 1 Hz

A measurement sample used here was obtained by pressing the conjugated diene polymer to a thickness of 1 mm, and punching the resultant out to a circle having a diameter of 10 mm.

### [Production of Conjugated Diene Polymer]

### (Preparation of Hydrogenation Catalyst)

A hydrogenation catalyst used in preparing a conjugated diene polymer in each of Examples and Comparative Examples described below was prepared by a method described in the following Production Example.

### <Production Example>

A nitrogen-purged reaction vessel was charged with 1 L of dried and purified cyclohexane, 100 mmol of bis(η5-cyclopentadienyl)titanium dichloride was added thereto, a n-hexane solution containing 200 mmol of trimethylaluminum was added thereto under sufficient stirring, and the resultant was reacted at room temperature for about 3 days to obtain a hydrogenation catalyst (TC-1).

### (Polymerization of Conjugated Diene Polymer)

### <(Example 1) Conjugated Diene Polymer A1>

A temperature-controllable autoclave having an internal capacity of 43 L and equipped with a stirrer and a jacket was used as a reactor, and was charged with 3,956.0 g of 1,3-butadiene, from which impurities had been precedently removed, 344.0 g of styrene, 25,800 g of cyclohexane, and 7.8 g of 2,2-di(2-tetrahydrofuryl)propane used as a polar compound, and the internal temperature of the reactor was kept at 42°C.

Subsequently, 1.7 g of n-butyllithium was supplied as a polymerization initiator to the reactor.

After starting a polymerization reaction, the temperature within the reactor started to increase due to heat generation through polymerization, and when the temperature increase stopped, 2.8 g of 1,3-dimethyl-2-imidazolidinone used as a modifier was added to the reactor, followed by stirring for 5 minutes. A part of the thus obtained polymer solution was extracted and dried to obtain a conjugated diene polymer before hydrogenation.

Thereafter, to the thus obtained conjugated diene polymer solution before hydrogenation, the hydrogenation catalyst (TC-1) prepared as described above in <Production Example> was added in an amount, in terms of Ti, of 60 ppm per 100 parts by mass of the conjugated diene polymer before hydrogenation, and a hydrogenation reaction was performed at a hydrogen pressure of 0.8 MPa and an average temperature of 85°C for 50 minutes to obtain a conjugated diene polymer A1.

The thus obtained conjugated diene polymer A1 had a hydrogenation rate of 68 mol%.

To a solution of the conjugated diene polymer thus obtained, 12.6 g of n-octadecyl-3-(3,5-di-t-butyl-4-hydroxyphenyl)-propionate and 3.0 g of 4,6-bis(octylthiomethyl)-o-cresol were added as antioxidants.

Analysis results of the conjugated diene polymer A1 are shown in Table 1.

### <(Example 2) Conjugated Diene Polymer A2>

A temperature-controllable autoclave having an internal capacity of 43 L and equipped with a stirrer and a jacket was used as a reactor, and was charged with 3,569.0 g of 1,3-butadiene, from which impurities had been precedently removed, 731.0 g of styrene, 25,800 g of cyclohexane, and 7.8 g of 2,2-di(2-tetrahydrofuryl)propane used as a polar compound, and the internal temperature of the reactor was kept at 42°C.

Subsequently, 1.6 g of n-butyllithium was supplied as a polymerization initiator to the reactor.

After starting a polymerization reaction, the temperature within the reactor started to increase due to heat generation through polymerization, and when the temperature increase stopped, 2.6 g of 1,3-dimethyl-2-imidazolidinone used as a modifier was added to the reactor, followed by stirring for 5 minutes. A part of the thus obtained polymer solution was extracted and dried to obtain a conjugated diene polymer before hydrogenation.

Thereafter, to the thus obtained conjugated diene polymer solution before hydrogenation, the hydrogenation catalyst (TC-1) prepared as described above in <Production Example> was added in an amount, in terms of Ti, of 60 ppm per 100 parts by mass of the conjugated diene polymer before hydrogenation, and a hydrogenation reaction was performed at a hydrogen pressure of 0.8 MPa and an average temperature of 85°C for 50 minutes to obtain a conjugated diene polymer A2.

The thus obtained conjugated diene polymer A2 had a hydrogenation rate of 68 mol%.

To a solution of the conjugated diene polymer thus obtained, 12.6 g of n-octadecyl-3-(3,5-di-t-butyl-4-hydroxyphenyl)-propionate and 3.0 g of 4,6-bis(octylthiomethyl)-o-cresol were added as antioxidants.

Analysis results of the conjugated diene polymer A2 are shown in Table 1.

### <(Example 3) Conjugated Diene Polymer A3>

A temperature-controllable autoclave having an internal capacity of 43 L and equipped with a stirrer and a jacket was used as a reactor, and was charged with 4,171.0 g of 1,3-butadiene, from which impurities had been precedently removed, 129.0 g of styrene, 25,800 g of cyclohexane, and 8.2 g of 2,2-di(2-tetrahydrofuryl)propane used as a polar compound, and the internal temperature of the reactor was kept at 42°C.

Subsequently, 1.8 g of n-butyllithium was supplied as a polymerization initiator to the reactor.

After starting a polymerization reaction, the temperature within the reactor started to increase due to heat generation through polymerization, and when the temperature increase stopped, 2.9 g of 1,3-dimethyl-2-imidazolidinone used as a modifier was added to the reactor, followed by stirring for 5 minutes. A part of the thus obtained polymer solution was extracted and dried to obtain a conjugated diene polymer before hydrogenation.

Thereafter, to the thus obtained conjugated diene polymer solution before hydrogenation, the hydrogenation catalyst (TC-1) prepared as described above in <Production Example> was added in an amount, in terms of Ti, of 60 ppm per 100 parts by mass of the conjugated diene polymer before hydrogenation, and a hydrogenation reaction was performed at a hydrogen pressure of 0.8 MPa and an average temperature of 85°C for 50 minutes to obtain a conjugated diene polymer A3.

The thus obtained conjugated diene polymer A3 had a hydrogenation rate of 68 mol%.

To a solution of the conjugated diene polymer thus obtained, 12.6 g of n-octadecyl-3-(3,5-di-t-butyl-4-hydroxyphenyl)-propionate and 3.0 g of 4,6-bis(octylthiomethyl)-o-cresol were added as antioxidants.

Analysis results of the conjugated diene polymer A3 are shown in Table 1.

### <(Example 4) Conjugated Diene Polymer A4>

A conjugated diene polymer A4 was obtained by employing the same production conditions as those employed in Example 1 except for the hydrogenation amount.

Analysis results of the conjugated diene polymer A4 are shown in Table 1.

### <(Example 5) Conjugated Diene Polymer A5>

A conjugated diene polymer A5 was obtained by employing the same production conditions as those employed in Example 1 except for the hydrogenation amount.

Analysis results of the conjugated diene polymer A5 are shown in Table 1.

### <(Example 6) Conjugated Diene Polymer A6>

A conjugated diene polymer A6 was obtained in the same manner as in Example 1 except that the amount of n-butyllithium used as the polymerization initiator was changed to 1.3 g, and that the amount of 1,3-dimethyl-2-imidazolidinone used as the modifier was changed to 2.1 g.

Analysis results of the conjugated diene polymer A6 are shown in Table 1.

### <(Example 7) Conjugated Diene Polymer A7>

A conjugated diene polymer A7 was obtained in the same manner as in Example 1 except that the amount of n-butyllithium used as the polymerization initiator was changed to 3.0 g, and that the amount of 1,3-dimethyl-2-imidazolidinone used as the modifier was changed to 4.9 g.

Analysis results of the conjugated diene polymer A7 are shown in Table 1.

### <(Example 8) Conjugated Diene Polymer A8>

A conjugated diene polymer A8 was obtained in the same manner as in Example 1 except that the amount of 1,3-dimethyl-2-imidazolidinone used as the modifier was changed to 1.6 g.

Analysis results of the conjugated diene polymer A8 are shown in Table 1.

### <(Example 9) Conjugated Diene Polymer A9>

A temperature-controllable autoclave having an internal capacity of 43 L and equipped with a stirrer and a jacket was used as a reactor, and was charged with 3,956.0 g of 1,3-butadiene, from which impurities had been precedently removed, 344.0 g of styrene, 25,800 g of cyclohexane, and 18.3 g of 2,2-di(2-tetrahydrofuryl)propane used as a polar compound, and the internal temperature of the reactor was kept at 42°C.

Subsequently, 4.1 g of n-butyllithium was supplied as a polymerization initiator to the reactor.

After starting a polymerization reaction, the temperature within the reactor started to increase due to heat generation through polymerization, and when the temperature increase stopped, 6.4 g of 2,2-dimethoxy-1-(3-(trimethoxysilyl)propyl)-1,2-azasilolidine used as a modifier was added to the reactor, followed by stirring for 5 minutes. A part of the thus obtained polymer solution was extracted and dried to obtain a conjugated diene polymer before hydrogenation.

Thereafter, to the thus obtained conjugated diene polymer solution before hydrogenation, the hydrogenation catalyst (TC-1) prepared as described above in <Production Example> was added in an amount, in terms of Ti, of 60 ppm per 100 parts by mass of the conjugated diene polymer before hydrogenation, and a hydrogenation reaction was performed at a hydrogen pressure of 0.8 MPa and an average temperature of 85°C for 50 minutes to obtain a conjugated diene polymer A9.

The thus obtained conjugated diene polymer A9 had a hydrogenation rate of 68 mol%.

To a solution of the conjugated diene polymer thus obtained, 12.6 g of n-octadecyl-3-(3,5-di-t-butyl-4-hydroxyphenyl)-propionate and 3.0 g of 4,6-bis(octylthiomethyl)-o-cresol were used as antioxidants.

Analysis results of the conjugated diene polymer A9 are shown in Table 1.

### <(Example 10) Conjugated Diene Polymer A10>

A conjugated diene polymer A10 was obtained in the same manner as in Example 1 except that the amount of 2,2-di(2-tetrahydrofuryl)propane used as the polar compound was changed to 4.9 g.

Analysis results of the conjugated diene polymer A10 are shown in Table 2.

### <(Example 11) Conjugated Diene Polymer A11>

A conjugated diene polymer A11 was obtained in the same manner as in Example 1 except that 2.0 g of ethanol was added instead of the modifier at the completion of the polymerization.

Analysis results of the conjugated diene polymer A11 are shown in Table 2.

### <(Example 12) Conjugated Diene Polymer A12>

A conjugated diene polymer A12 was obtained in the same manner as in Example 5 except that the amount of 2,2-di(2-tetrahydrofuryl)propane used as the polar compound was changed to 8.1 g, and that the hydrogenation amount was changed.

Analysis results of the conjugated diene polymer A12 are shown in Table 2.

### <(Example 13) Conjugated Diene Polymer A13>

A conjugated diene polymer A13 was obtained in the same manner as in Example 1 except that the amount of n-butyllithium used as the polymerization initiator was changed to 4.1 g, that the amount of 2,2-di(2-tetrahydrofuryl)propane used as the polar compound was changed to 11.3 g, and that the modifier was changed to 4.1 g of 1-methyl-4-[3-(triethoxysilyl)propyl]piperazine.

Analysis results of the conjugated diene polymer A13 are shown in Table 2.

### <(Example 14) Conjugated Diene Polymer A14>

A conjugated diene polymer A14 was obtained in the same manner as in Example 9 except that the amount of 2,2-di(2-tetrahydrofuryl)propane used as the polar compound was changed to 18.5 g, and that the amount of 2,2-dimethoxy-1-(3-(trimethoxysilyl)propyl)-1,2-azasilolidine used as the modifier was changed to 3.9 g.

Analysis results of the conjugated diene polymer A14 are shown in Table 2.

### <(Example 15) Conjugated Diene Polymer A15>

A conjugated diene polymer A15 was obtained in the same manner as in Example 9 except that the amount of n-butyllithium used as the polymerization initiator was changed to 2.2 g, that the amount of 2,2-di(2-tetrahydrofuryl)propane used as the polar compound was changed to 9.9 g, and that the amount of 2,2-dimethoxy-1-(3-(trimethoxysilyl)propyl)-1,2-azasilolidine used as the modifier was changed to 3.4 g.

Analysis results of the conjugated diene polymer A15 are shown in Table 2.

### <(Example 16) Conjugated Diene Polymer A16>

A temperature-controllable autoclave having an internal capacity of 43 L and equipped with a stirrer and a jacket was used as a reactor, and was charged with 3,999.0 g of 1,3-butadiene, from which impurities had been precedently removed, 301.0 g of styrene, 25,800 g of cyclohexane, and 59.9 g of 2,2-di(2-tetrahydrofuryl)propane used as a polar compound, and the internal temperature of the reactor was kept at 42°C.

Subsequently, 8.1 g of n-butyllithium was supplied as a polymerization initiator to the reactor.

After starting a polymerization reaction, the temperature within the reactor started to increase due to heat generation through polymerization, and when the temperature increase stopped, 1.6 g of silicon tetrachloride used as a modifier was added to the reactor, followed by stirring for 5 minutes. A part of the thus obtained polymer solution was extracted and dried to obtain a conjugated diene polymer before hydrogenation.

Thereafter, to the thus obtained conjugated diene polymer solution before hydrogenation, the hydrogenation catalyst (TC-1) prepared as described above in <Production Example> was added in an amount, in terms of Ti, of 60 ppm per 100 parts by mass of the conjugated diene polymer before hydrogenation, and a hydrogenation reaction was performed at a hydrogen pressure of 0.8 MPa and an average temperature of 85°C for 40 minutes to obtain a conjugated diene polymer A16.

The thus obtained conjugated diene polymer A16 had a hydrogenation rate of 55 mol%.

To a solution of the conjugated diene polymer thus obtained, 12.6 g of n-octadecyl-3-(3,5-di-t-butyl-4-hydroxyphenyl)-propionate and 3.0 g of 4,6-bis(octylthiomethyl)-o-cresol were used as antioxidants.

Analysis results of the conjugated diene polymer A16 are shown in Table 2.

### <(Example 17) Conjugated Diene Polymer A17>

A conjugated diene polymer A17 was obtained in the same manner as in Example 1 except that the amount of 1,3-dimethyl-2-imidazolidinone used as the modifier was changed to 1.9 g.

Analysis results of the conjugated diene polymer A17 are shown in Table 2.

### <(Example 18) Conjugated Diene Polymer A18>

A conjugated diene polymer A18 was obtained in the same manner as in Example 1 except that the amount of 2,2-di(2-tetrahydrofuryl)propane used as the polar compound was changed to 1.8 g.

Analysis results of the conjugated diene polymer A18 are shown in Table 2.

### <(Comparative Example 1) Conjugated Diene Polymer B1>

A temperature-controllable autoclave having an internal capacity of 43 L and equipped with a stirrer and a jacket was used as a reactor, and was charged with 3,956.0 g of 1,3-butadiene, from which impurities had been precedently removed, 344.0 g of styrene, 25,800 g of cyclohexane, and 19.9 g of 2,2-di(2-tetrahydrofuryl)propane used as a polar compound, and the internal temperature of the reactor was kept at 42°C.

Subsequently, 4.4 g of n-butyllithium was supplied as a polymerization initiator to the reactor.

After starting a polymerization reaction, the temperature within the reactor started to increase due to heat generation through polymerization, and when the temperature increase stopped, 4.8 g of 2,2-dimethoxy-1-(3-trimethoxysilyl)propyl-1,2-azasilosilolidine used as a modifier was added to the reactor, followed by stirring for 5 minutes. A part of the thus obtained polymer solution was extracted and dried to obtain a conjugated diene polymer before hydrogenation.

Thereafter, to the thus obtained conjugated diene polymer solution before hydrogenation, the hydrogenation catalyst (TC-1) prepared as described above in <Production Example> was added in an amount, in terms of Ti, of 60 ppm per 100 parts by mass of the conjugated diene polymer before hydrogenation, and a hydrogenation reaction was performed at a hydrogen pressure of 0.8 MPa and an average temperature of 85°C for 50 minutes to obtain a conjugated diene polymer B1.

The thus obtained conjugated diene polymer B1 had a hydrogenation rate of 68 mol%.

To a solution of the conjugated diene polymer thus obtained, 12.6 g of n-octadecyl-3-(3,5-di-t-butyl-4-hydroxyphenyl)-propionate and 3.0 g of 4,6-bis(octylthiomethyl)-o-cresol were used as antioxidants.

Analysis results of the conjugated diene polymer B1 are shown in Table 3.

### <(Comparative Example 2) Conjugated Diene Polymer B2>

A conjugated diene polymer B2 was obtained in the same manner as in Example 2 except that the amount of butadiene was changed to 3225.0 g, and that the amount of styrene was changed to 1075.0 g.

Analysis results of the conjugated diene polymer B2 are shown in Table 3.

### <(Comparative Example 3) Conjugated Diene Polymer B3>

A conjugated diene polymer B3 was obtained in the same manner as in Example 10 except that the amount of 2,2-di(2-tetrahydrofuryl)propane used as the polar compound was changed to 3.1 g.

Analysis results of the conjugated diene polymer B3 are shown in Table 3.

### <(Comparative Example 4) Conjugated Diene Polymer B4>

A temperature-controllable autoclave having an internal capacity of 43 L and equipped with a stirrer and a jacket was used as a reactor, and was charged with 3,956.0 g of 1,3-butadiene, from which impurities had been precedently removed, 344.0 g of styrene, 25,800 g of cyclohexane, and 10.6 g of 2,2-di(2-tetrahydrofuryl)propane used as a polar compound, and the internal temperature of the reactor was kept at 42°C.

Subsequently, 12.6 g of n-butyllithium was supplied as a polymerization initiator to the reactor.

When the temperature increase stopped, 20.2 g of 1,3-dimethyl-2-imidazolidinone used as a modifier was added to the reactor, followed by stirring for 5 minutes. A part of the thus obtained polymer solution was extracted and dried to obtain a conjugated diene polymer before hydrogenation.

Thereafter, to the thus obtained conjugated diene polymer solution before hydrogenation, the hydrogenation catalyst (TC-1) prepared as described above in <Production Example> was added in an amount, in terms of Ti, of 60 ppm per 100 parts by mass of the conjugated diene polymer before hydrogenation, and a hydrogenation reaction was performed at a hydrogen pressure of 0.8 MPa and an average temperature of 85°C for 50 minutes to obtain a conjugated diene polymer B4.

The thus obtained conjugated diene polymer B4 had a hydrogenation rate of 68 mol%.

To a solution of the conjugated diene polymer B4 thus obtained, 12.6 g of n-octadecyl-3-(3,5-di-t-butyl-4-hydroxyphenyl)-propionate and 3.0 g of 4,6-bis(octylthiomethyl)-o-cresol were added as antioxidants.

Analysis results of the conjugated diene polymer B4 are shown in Table 3.

### <(Comparative Example 5) Conjugated Diene Polymer B5>

A conjugated diene polymer B5 was obtained in the same manner as in Example 1 except that the hydrogenation amount was changed.

Analysis results of the conjugated diene polymer B5 are shown in Table 3.

### <(Comparative Example 6) Conjugated Diene Polymer B6>

A conjugated diene polymer B6 was obtained in the same manner as in Example 3 except that the amount of butadiene was changed to 4,300.0 g, and that the amount of styrene was changed to 0 g.

Analysis results of the conjugated diene polymer B6 are shown in Table 3.

### <(Comparative Example 7) Conjugated Diene Polymer B7>

A conjugated diene polymer B7 was obtained in the same manner as in Comparative Example 1 except that the amount of n-butyllithium used as the polymerization initiator was changed to 6.8 g, that the amount of 2,2-di(2-tetrahydrofuryl)propane used as the polar compound was changed to 30.4 g, and that the amount of 2,2-dimethoxy-1-(3-(trimethoxysilyl)propyl)-1,2-azasilolidine used as the modifier was changed to 7.3 g.

Analysis results of the conjugated diene polymer B7 are shown in Table 3.

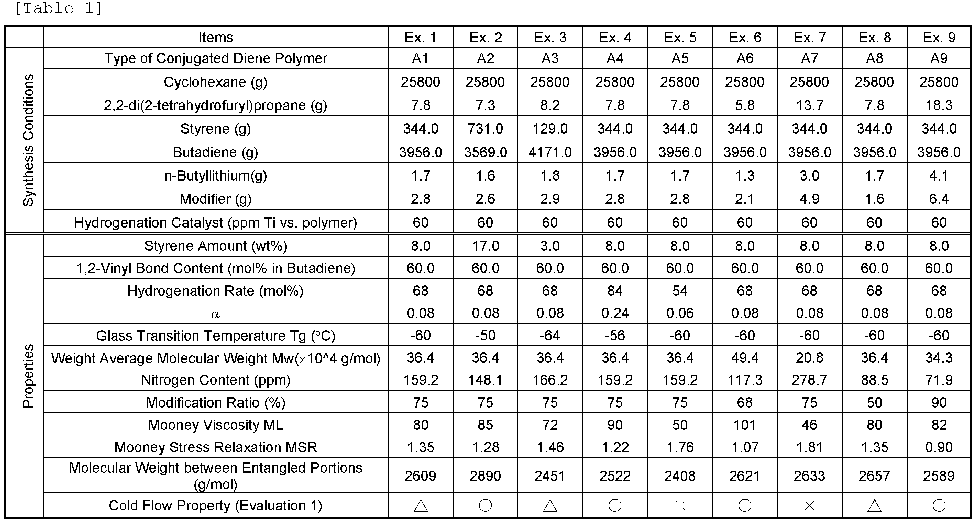

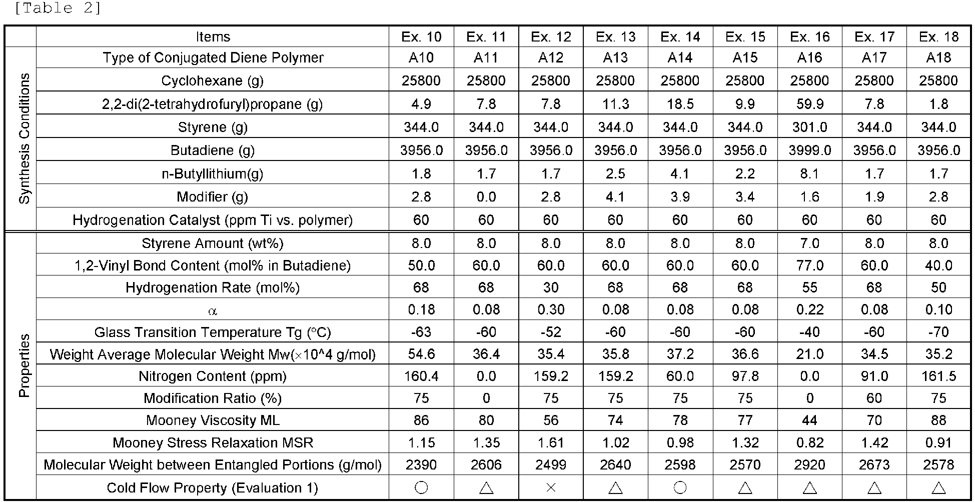

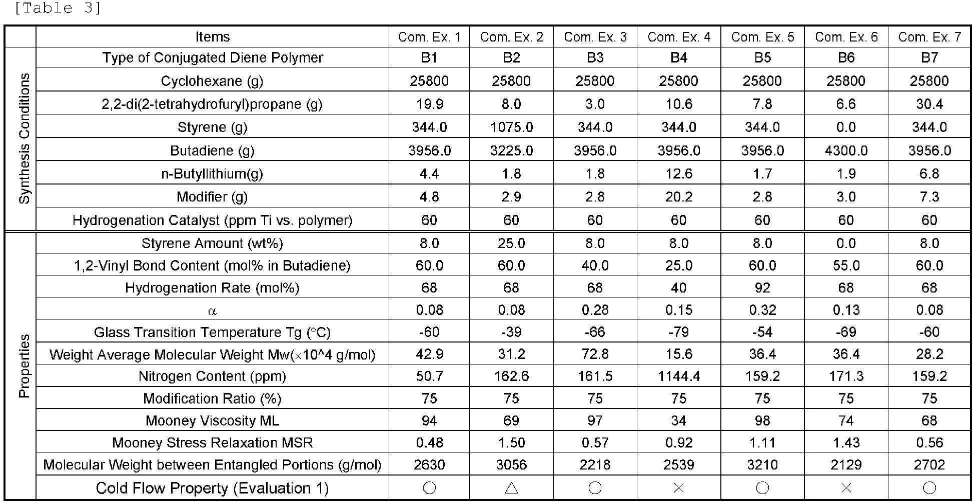

### [Examples 19 to 37], [Comparative Examples 8 to 14]

### (Preparation of Crosslinking Rubber Composition, and Evaluation of Physical Properties)

As shown in Tables 1 to 3, the conjugated diene polymers A1 to A18 obtained in Examples 1 to 18, and the conjugated diene polymers B1 to B7 obtained in Comparative Examples 1 to 7 were used to obtain crosslinking rubber compositions respectively containing the raw material rubbers in accordance with compositions described below.

Compounding conditions were as follows.

### (Compounding Conditions)

An amount of each compounding agent shown in Tables 4 to 6 is shown in a unit of parts by mass based on 100 parts by mass of a rubber component excluding a rubber softener.
- Conjugated diene polymers: A1 to A18, and B1 to B7
- Natural rubber: RSS3
- High cis butadiene: manufactured by UBE
- Silica: VN3 manufactured by Evonik Degussa (N2SA: 175 m²/g)
- Carbon black: Diablack N339 manufactured by Mitsubishi Chemical Corporation (N2SA: 96 m²/g, DBP absorption: 124 mL/100 g)
- Softener: Diana Process AH-24 manufactured by Idemitsu Kosan Co., Ltd. (aroma oil)
- Silane coupling agent: Si69 manufactured by Evonik Degussa
- Anti-aging agent: Nocrac 6C manufactured by Ouchi Shinko Chemical Industrial Co., Ltd.
- Stearic acid: beads stearic acid "Tsubaki" manufactured by NOF Corporation
- Zinc oxide: three types of zinc oxides manufactured by HAKUSUI TECH.
- Wax: OZOACE 0355 manufactured by Nippon Seiro Co., Ltd.
- Sulfur: sulfur powder manufactured by Tsurumi Chemical Industry Co., Ltd.
- Vulcanization accelerator: NOCCELER CZ manufactured by Ouchi Shinko Chemical Industrial Co., Ltd.

### (Kneading Method, and Evaluation of Moldability of Rubber Composition)

The above-described materials were kneaded by the following method to obtain a crosslinking rubber composition.

In accordance with compositions shown in Tables 4 to 6, rubber compositions of examples and comparative examples were prepared.

A closed kneader (having an internal capacity of 0.3 L) equipped with a temperature controller was used to knead, as first stage kneading, each of the rubber component, the silica, the carbon black, the silane coupling agent, the softener, the zinc oxide, and the stearic acid under conditions of a filling rate of 65% and a rotor speed of 30 to 50 rpm.

At this point, the temperature of the closed kneader was controlled to obtain the rubber composition (compound) at a discharge temperature of 155 to 160°C.

Next, as second stage kneading, after the compound obtained as described above was cooled to room temperature, the anti-aging agent was added thereto, and the resultant was kneaded again for improving dispersibility of the silica. Also in this case, the discharge temperature of the compound was adjusted to 155 to 160°C by the temperature control of the kneader.

After cooling the resultant, as third stage kneading, the resultant was kneaded with the sulfur and the vulcanization accelerators added thereto with an open roll set to 70°C. After the kneading, moldability of the rubber composition was evaluated based on sheet surface roughness of the crosslinking rubber composition discharged from the open roll.

Thereafter, the resultant was molded, and vulcanized with a vulcanization press at 160°C, and the thus vulcanized rubber composition was evaluated.

A vulcanization time was set to a value obtained by adding 5 minutes to 90% vulcanization time of the corresponding sample measured by a method described below.

Specifically, the evaluation was made as follows. Evaluation results are shown in Tables 4 to 6.

### <Evaluation 2: Crack Growth Resistance of Rubber Composition>

The crack growth resistance of each rubber composition was evaluated by elongating a No. 5 dumbbell of the rubber composition having an initial crack with FT-3132 manufactured by Kitahama Seisakusho Co., Ltd., at a strain of 100% and at 300 rpm, and counting the number of times of the elongation performed until break.

In Tables 4 to 6, the evaluation results are shown in numerical form calculated assuming that crack growth resistance of Comparative Example 8 was 100. A conjugated diene polymer of the present embodiment aims to exhibit excellent crack growth resistance, and hence is required to have a value of 120 or more.

### <Evaluation 3: Elongation at Break>

Tensile strength was measured in accordance with a tensile test method of JIS K6251.

In Tables 4 to 6, the evaluation results are shown in numerical form calculated assuming that the elongation at break of Comparative Example 8 was 100. A conjugated diene polymer of the present embodiment aims to exhibit excellent balance between crack growth resistance and elongation at break, and hence is required to have a value of 50 or more.

### <Evaluation 4: Low Fuel Consumption Performance of Rubber Composition>

A viscosity tester "ARES-G2" manufactured by TA Instrument was used to measure a viscoelasticity parameter in a twist mode. A tan δ measured at 50°C, a frequency of 10 Hz, and a strain of 3% was used as an index of low fuel consumption performance, and the evaluation results are shown in numerical form calculated assuming that the low fuel consumption performance of Comparative Example 8 was 100.

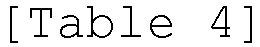

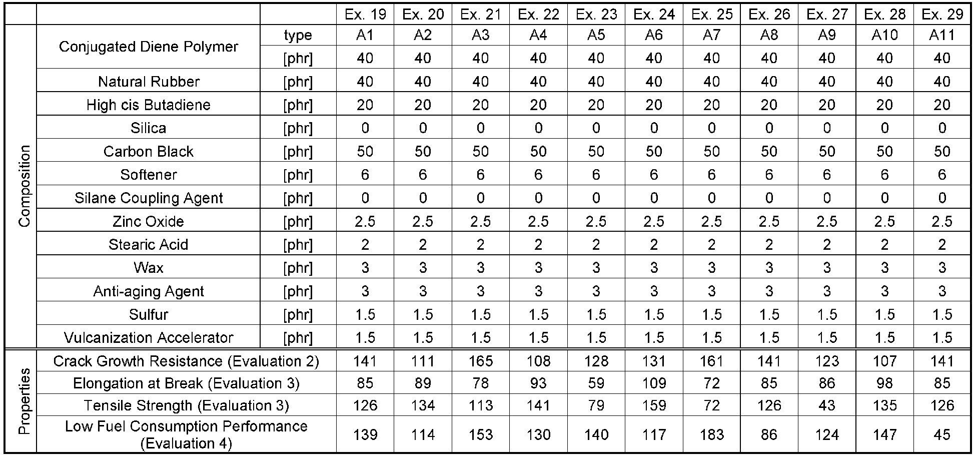

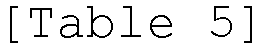

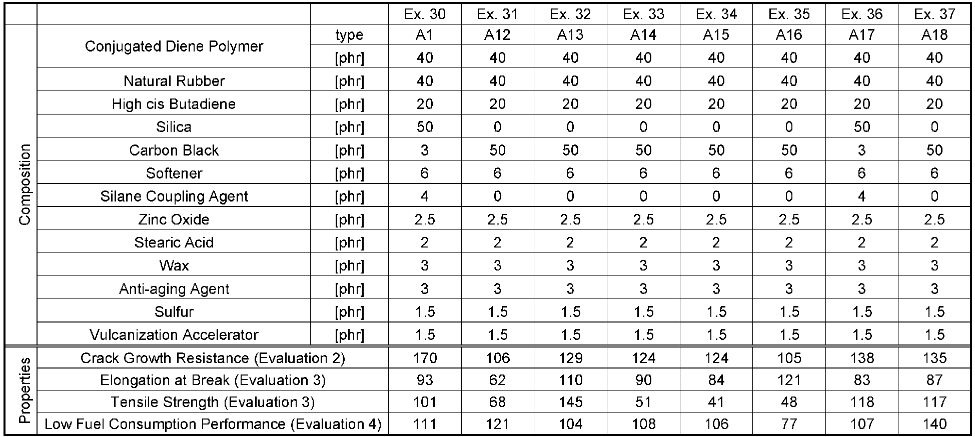

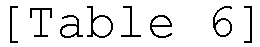

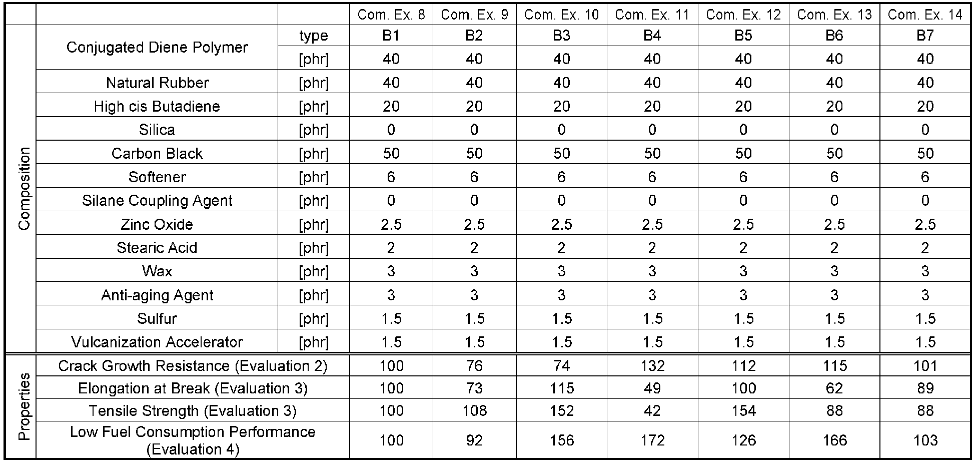

It was revealed, as shown in Tables 4 to 6, that Examples 19 to 37 are superior in the evaluation of the crack growth resistance and the elongation at break to Comparative Examples 8 to 14, and are also excellent in the balance between these properties.

This application is based upon the prior Japanese Patent Application (Japanese Patent Application No. 2022-108011) filed in Japanese Patent Office on July 4, 2022, the entire contents of which are incorporated herein by reference.

### Industrial Applicability

A conjugated diene polymer of the present invention is industrially applicable in the fields of tire treads, tire casing members such as sidewalls, interiors and exteriors of vehicles, anti-vibration rubbers, belts, shoes, foam bodies, and various industrial products.

## Claims

1. A conjugated diene polymer,
wherein a molecular weight between entangled portions is 2,400 g/mol or more and 3,000 g/mol or less,
a Mooney viscosity measured at 100°C is 40 or more, and Mooney stress relaxation (MSR) is 0.8 or more, and
a vinyl aromatic monomer unit content is 1% by mass or more and 18% by mass or less.

2. The conjugated diene polymer according to claim 1, having a weight average molecular weight of 300,000 or more.

3. The conjugated diene polymer according to claim 1,
wherein a nitrogen content is 70 ppm or more and 300 ppm or less, and a modification ratio is 60% or more.

4. The conjugated diene polymer according to claim 1,
wherein the Mooney stress relaxation (MSR) is 0.80 or more and 1.80 or less.

5. The conjugated diene polymer according to claim 1,
wherein assuming that a content of a structure represented by the following formula (1) is C1 mol%, that a content of a structure represented by the following formula (2) is C2 mol%, that a content of a structure represented by the following formula (3) is C3 mol%, and that a content of a structure represented by the following formula (4) is C4 mol%, 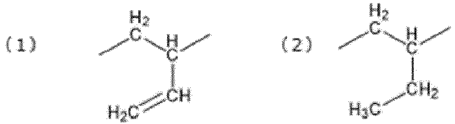 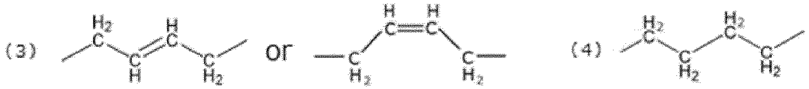 a difference α between a value of (C2 + C4)/(C1 + C2 + C3 + C4) and a value of (C1 + C2)/(C1 + C2 + C3 + C4) is 0.1 or less.

6. The conjugated diene polymer according to claim 1,
wherein a nitrogen content is 90 ppm or more and 300 ppm or less, and
a modification ratio is 60% or more.

7. The conjugated diene polymer according to claim 1,
wherein the conjugated diene polymer is a hydrogenated styrene-butylene copolymer having a hydrogenation rate of 50 mol% or more.

8. A rubber composition, comprising:
100 parts by mass of a rubber component containing 30 parts by mass or more of the conjugated diene polymer according to any one of claims 1 to 7, and 30 parts by mass or more of a natural rubber; and
30 parts by mass or more of carbon black.

9. A member for a tire, comprising the rubber composition according to claim 8.
